# EUROPEAN PATENT SPECIFICATION

(11) **EP 2 415 510 B1**
(45) Date of publication and mention of the grant of the patent: **22.07.2015**
(21) Application number: 10758362.7
(22) Date of filing: 04.03.2010
(51) Int. Cl.: B01D 39/20, B01D 39/14, B01D 53/86, B01D 53/94, B01J 23/63, B01J 35/04, B01J 37/02, F01N 3/02, B01D 46/24, B01J 35/00, B01J 23/40, B01J 23/58, B01J 35/02, C04B 38/00, F01N 3/28, F01N 3/022, C04B 111/00

(54) **HONEYCOMB FILTER AND METHOD OF MANUFACTURING SAME**
WABENFILTER UND VERFAHREN ZU SEINER HERSTELLUNG
FILTRE EN NID D'ABEILLE ET SON PROCÉDÉ DE FABRICATION

(30) Priority: 31.03.2009 JP 2009086984
(43) Date of publication of application: 08.02.2012
(73) Proprietor: NGK Insulators, Ltd., Nagoya-city, Aichi 467-8530 (JP)
(72) Inventor: IWASAKI, Shingo, Nagoya-city Aichi 467-8530 (JP); MIZUTANI, Takashi, Nagoya-city Aichi 467-8530 (JP)
(74) Representative: Naylor, Matthew John
(86) International application number: PCT/JP2010/053526
(87) International publication number: WO 2010/113586

(56) References cited:
- EP-A1- 1 589 199
- EP-A1- 1 961 930
- EP-A1- 2 614 874
- WO-A1-2008/105081
- JP-A- 8 332 329
- JP-A- 54 110 189
- JP-A- 2000 202 220
- JP-A- 2002 326 035
- JP-A- 2003 010 616
- JP-A- 2006 110 413
- JP-A- 2009 006 326

## Description

### Technical Field

The present invention relates to a honeycomb filter and a method for manufacturing the honeycomb filter.

### Background Art

A honeycomb filter that has a porous partition portion in which cells with one end open and the other end sealed and cells with one end sealed and the other end open are alternately arranged, and a layer that captures and removes particulate matter (PM) contained in exhaust gas and is formed on the partition portion has been proposed (e.g., refer to Patent Documents 1 to 3). This honeycomb filter can capture PM through the capturing layer while reducing the pressure loss.

### Citation List

### Patent Document

Patent Document 1: Japanese Unexamined Patent Application Publication No. 2004-216226
Patent Document 2: Japanese Unexamined Patent Application Publication No. 06-33734
Patent Document 3: Japanese Unexamined Patent Application Publication No. 01-304022

### Disclosure of Invention

In such a honeycomb filter, a regeneration process that burns captured PM is performed. In some cases, a flow velocity distribution occurs in exhaust gas passing through a channel equipped with such a honeycomb filter such that the flow velocity in the central region in the axial direction of the honeycomb filter is larger than that in the outer periphery. However, according to the honeycomb filter described in Patent Document 1, although the PM capturing performance is enhanced by forming the capturing layer on the partition portion, the flow velocity distribution in the channel is not considered and an efficiency of regeneration process that burns captured PM is not considered.

The present invention has been made to address such challenges and mainly aims to provide a honeycomb filter that can remove captured solid components on the honeycomb filter more efficiently and a method for manufacturing the honeycomb filter.

The document EP 1 589 199 A1 describes a honeycomb filter with a coating layer which may have a variable thickness.

To achieve the primary object described above, the present invention adopts the following means.

A honeycomb filter of the present invention is set out in claim 1.

In this honeycomb filter, capturing layers that capture and remove solid components in the fluid are formed on the porous partition portion that forms a plurality of cells each having one end open and the other end sealed and functioning as a channel of a fluid. The capturing layers are formed so that the thickness of the capturing layers on the partition portion has a tendency to decrease from an outer peripheral region of the honeycomb filter toward a central region of the honeycomb filter, the central region and the outer peripheral region being included in an orthogonal plane orthogonal to the channel. The fluid flowing in the tube has a flow velocity distribution in which the flow velocity is higher in the central region side than in the outer peripheral region side. Therefore, if regeneration process that burns captured solid components in the filter is performed, the central region side becomes a high temperature easily, and the outer peripheral region side becomes a low temperature easily. Here, the thickness of the capturing layers at the central side has a tendency to be small, so that the fluid is not easy to flow at the outer side, and the fluid is easy to flow at the central side. Thus, the outer side, which is less likely to burn and remove the solid components, is made less likely to capture the solid components, and the central side, which is easy to burn and remove the solid components, is easy to capture more solid components. Therefore, the captured solid components can be removed more efficiently. The phrase "tendency that the thickness decreases from an outer peripheral region toward a central region" means that the thickness may remain the same or may increase in some portions from the outer peripheral region toward the central region as long as the orthogonal plane as a whole exhibits a general tendency that the thickness in the central portion is smaller.

In the honeycomb filter of the present invention, the ratio of the thickness of the capturing layers in the central region to the thickness in the outer peripheral region is in the range of 60% or more and 95% or less and more preferably 70% or more and 90% or less. When this ratio is 60% or more, the pressure loss can be further reduced. When this ratio is 95% or less, the PM deposition efficiency (reproduction efficiency) that is the removal efficiency of PM can be further improved.

In the honeycomb filter of the present invention, the capturing layers may be formed to have a first thickness on the partition portion in the outer peripheral region and may be formed to have a second thickness smaller than the first thickness on the partition portion in the central region. In forming a tendency that the thickness decreases from the outer peripheral region of the honeycomb filter toward the central region of the honeycomb filter, the capturing layers may be formed on the partition portion so that the thickness gradually decreases from the outer peripheral region of the honeycomb filter toward the central region of the honeycomb filter or the capturing layers may be formed on the partition portion so that the thickness decreases stepwise from the outer peripheral region of the honeycomb filter toward the central region of the honeycomb filter.

In the honeycomb filter of the present invention, the honeycomb filter may be formed by bonding two or more honeycomb structures (also referred to as honeycomb constructions), each having the partition portion, by a bonding layer, and the capturing layers may be formed on the partition portion so that the thickness of the capturing layers has a tendency to decrease from the outer peripheral region of the honeycomb filter toward the central region of the honeycomb filter, the central region and the outer peripheral region being included in the orthogonal plane orthogonal to the channel. According to this honeycomb filter formed by bonding honeycomb structures, captured solid components on the honeycomb filter can be more efficiently removed. Here, at least one of the honeycomb structures may be a honeycomb structure that includes the capturing layers formed on the partition portion so that the thickness of the capturing layers has a tendency to decrease from an outer peripheral region of the honeycomb structure toward a central region of the honeycomb structure, the central region and the outer peripheral region being included in the orthogonal plane. In this manner, such a honeycomb structure in which the thickness is smaller in the central region, more solid components can be captured in the central region, and the captured solid components can be removed more efficiently for the unit of the honeycomb structure.

A further honeycomb filter of the present invention is set out in claim 5.

This honeycomb filter includes at least one honeycomb structure having capturing layers formed on the partition portion so that the thickness has a tendency to decrease from an outer peripheral region of the honeycomb structure toward a central region of the honeycomb structure, the central region and the outer peripheral region being included in an orthogonal plane orthogonal to the channel. According to such a honeycomb structure in which the thickness is smaller in the central region, the fluid can pass through in the central region easily, and more solid components are captured in the central region. Accordingly, captured solid components can be removed more efficiently for the unit of the honeycomb structure, and captured solid components can be more efficiently removed as a honeycomb filter.

In this honeycomb filter of the present invention having two or more honeycomb structures, the capturing layers are formed so that the ratio of the thickness in the central region to the thickness in the outer peripheral region is in the range of 60% or more and 95% or less and more preferably 70% or more and 90% or less. When this ratio is 60% or more, the pressure loss can be further reduced. When this ratio is 95% or less, the PM removal efficiency (regeneration efficiency) can be further improved.

In the honeycomb filter of the present invention having two or more honeycomb structures, at least one of which is a honeycomb structure in which the thickness is smaller in the central region, the honeycomb structure in which the capturing layers are formed so that the thickness has a tendency to decrease from the outer peripheral region toward the central region of the honeycomb structure is at least disposed in a central region of the honeycomb filter included in the orthogonal plane. In this manner, the central region of the honeycomb filter where the fluid is easy to flow, the fluid can pass through in the central region easily, and more solid components are captured in the central region. Therefore, captured solid components can be removed more efficiently as a honeycomb structure.

In the honeycomb filter of the present invention, the partition portion may be formed so that cells each having one end open and the other end sealed and cells each having one end sealed and the other end open are alternately arranged, and the capturing layers may be formed on the partition portion at the inlet side of the fluid. In this manner, the pressure loss can be further reduced and solid components in the fluid can be more efficiently removed.

In the honeycomb filter of the present invention, the capturing layers may support a catalyst containing at least one of platinum and palladium. In this manner, solid components on the capturing layers can be more easily removed.

In the present invention, a method for manufacturing a honeycomb filter that captures and removes solid components in a fluid is set out in claim 8.

According to this honeycomb filter manufacturing method, the supply adjusting member is adjusted to form the capturing layers so that the thickness of the capturing layers has a tendency to decrease from an outer peripheral region of the honeycomb filter toward a central region of the honeycomb filter. Accordingly, the fluid is easy to flow at the central side, while the fluid is hard to flow at the outer side. Thus, the outer side, which is less likely to burn and remove the solid components, is made less likely to capture the solid components, and the central side, which is easy to burn and remove the solid components, is easy to capture more solid components. Therefore, the captured solid components can be removed more efficiently. The capturing layers at the central region side can be relatively easily made to have a small thickness by adjusting the supply adjusting member.

A further honeycomb filter manufacturing method of the present invention is set out in claim 9.

According to this honeycomb filter manufacturing method, the supply adjusting member is adjusted to form capturing layers so that the thickness on the partition portion has a tendency to decrease from the outer peripheral region toward the central region, and the formation of the capturing layers is conducted on honeycomb structures that constitute a honeycomb filter before or after bonding of the honeycomb structures. Since the outer side, which is less likely to burning remove the solid components, is made less likely to capture the solid components, and a central side, which is easy to burn and remove the solid components, is easy to capture more solid components. Therefore, the captured solid components can be removed more efficiently. The capturing layers at the central region side can be relatively easily made to have a small thickness by adjusting the supply adjusting member.

### Brief Description of Drawings

[Fig. 1] Fig. 1 is a schematic diagram showing an example of a configuration of a honeycomb filter 20.
[Fig. 2] Fig. 2 is a diagram illustrating an example of the thickness of capturing layers 24.
[Fig. 3] Fig. 3 is a diagram illustrating an example of points where the thickness of the capturing layer 24 is measured.
[Fig. 4] Fig. 4 is a diagram illustrating a method for the calculating average pore diameter and porosity of the capturing layer by SEM observation.
[Fig. 5] Fig. 5 is a diagram illustrating a method for calculating the thickness of the capturing layers 24.
[Fig. 6] Fig. 6 is a diagram illustrating the state of flow of exhaust gas and the elapse for executing regeneration.
[Fig. 7] Fig. 7 is a schematic diagram illustrating an example of a configuration of a honeycomb filter 30.
[Fig. 8] Fig. 8 is a diagram illustrating an example of the thickness of capturing layers 34.
[Fig. 9] Fig. 9 is a diagram illustrating an example of the thickness of capturing layers.
[Fig. 10] Fig. 10 is a diagram illustrating an example of points where the thickness of the capturing layer 34 is measured.
[Fig. 11] Fig. 11 is a schematic diagram illustrating an example of a configuration of a honeycomb filter 40.
[Fig. 12] Fig. 12 is a diagram illustrating an example of the thickness of capturing layers.
[Fig. 13] Fig. 13 includes diagrams that illustrate a method for forming capturing layers using a capturing layer forming device 50.
[Fig. 14] Fig. 14 shows measurement results indicating the relationship between the pressure loss and regeneration efficiency relative to the ratio of the thickness according to integral-type filters of Experimental Examples 1 to 7.
[Fig. 15] Fig. 15 shows measurement results indicating the relationship between the pressure loss and regeneration efficiency relative to the ratio of the thickness according to integral-type filters of Experimental Examples 8 to 11.
[Fig. 16] Fig. 14 shows measurement results indicating the relationship between the pressure loss and regeneration efficiency relative to the ratio of the thickness according to integral-type filters of Experimental Examples 12 to 16.
[Fig. 17] Fig. 14 shows measurement results indicating the relationship between the pressure loss and regeneration efficiency relative to the ratio of the thickness according to integral-type filters of Experimental Examples 17 to 23.

### Best Modes for Carrying Out the Invention

Next, embodiments for implementing the present invention are described with reference to the drawings. For instance, a honeycomb filter of the present invention is set in the exhaust tube for the exhaust purification of the engine driven in a comparatively constant load such as the power generating systems and the construction equipment. The honeycomb filter captures and removes solid components (particulate matter, hereinafter also referred to as "PM") in the exhaust gas. According to this honeycomb filter, when the amount of the captured PM reaches a particular value, a process (regeneration process) of burning captured PM is performed by increasing the fuel concentration. It is preferable to use the honeycomb filter of the present invention for the usage in which the regeneration process is not interrupted easily, and the reproduction process is executable according to the regular timing provided beforehand, for example the exhaust purification of the engine driven in a constant load.

### [First Embodiment]

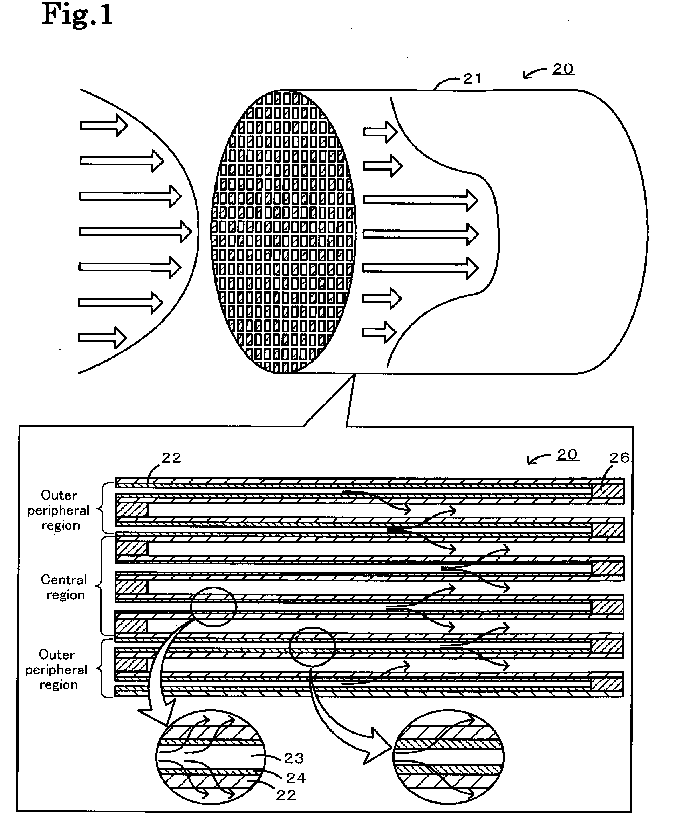

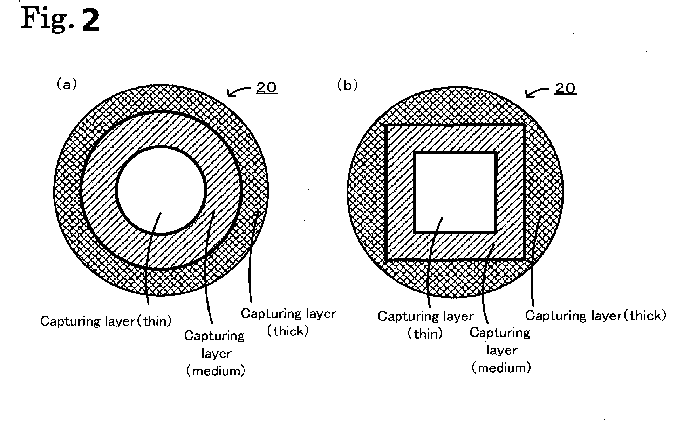

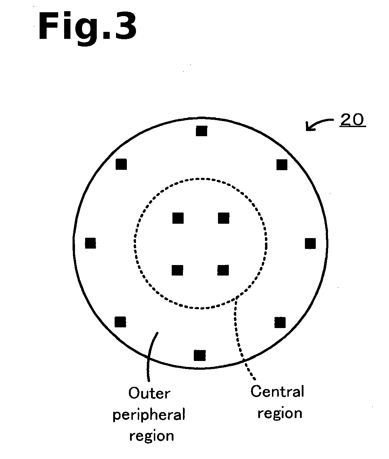

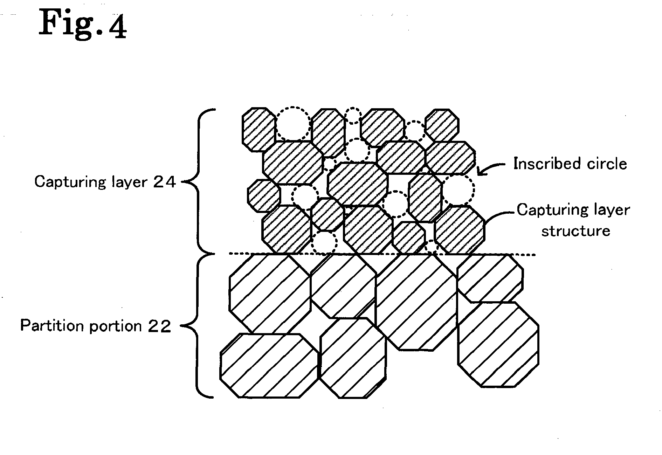

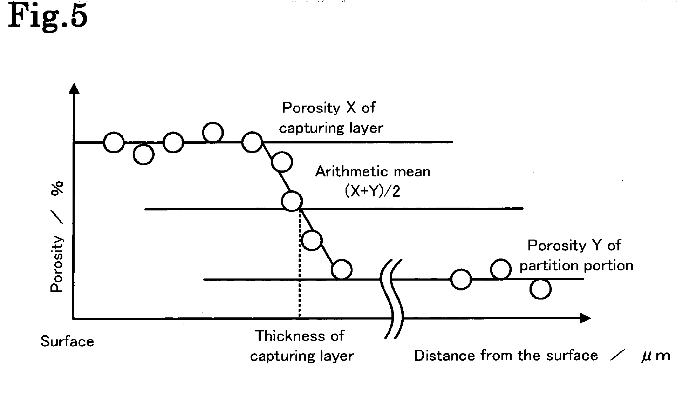

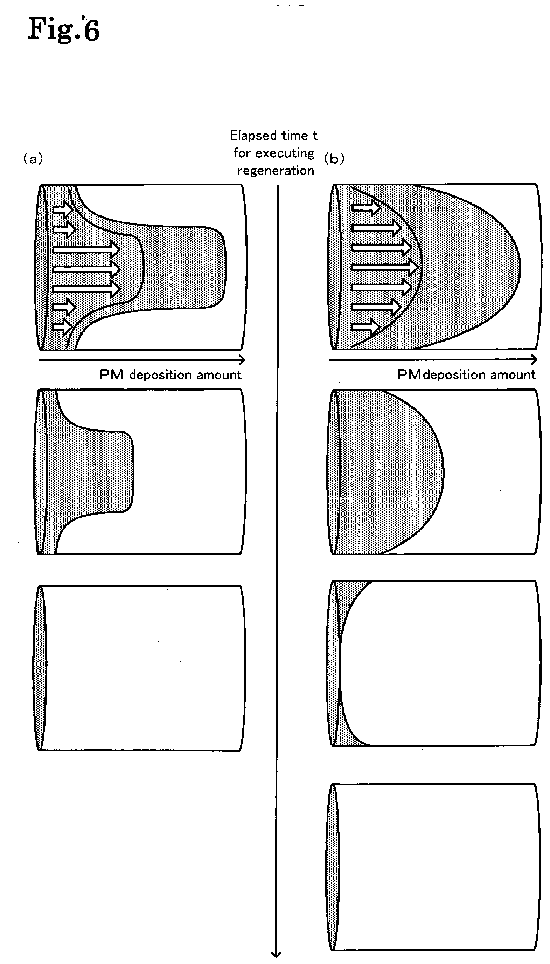

A filter having an integrally formed structure is described as a first embodiment. Fig. 1 is a schematic diagram illustrating an example of a configuration of a honeycomb filter 20 according to a first embodiment of the present invention. Fig. 2 is a diagram illustrating an example of the thickness of capturing layers 24, Fig. 3 is a diagram illustrating an example of points where the thickness of the capturing layer 24 is measured, Fig. 4 is a diagram illustrating a method for the calculating average pore diameter and porosity of the capturing layer by observation with a scanning electron microscope (SEM), Fig. 5 is a diagram illustrating a method for calculating the thickness of the capturing layers 24, and Fig. 6 is a diagram illustrating the state of flow of exhaust gas and the elapse for executing regeneration. The honeycomb filter 20 includes a porous partition portion 22 that forms a plurality of cells 23 each having one end open and the other end sealed with a sealing portion 26, the cells 23 functioning as channels for exhaust gas as a fluid; capturing layers 24 that capture and remove solid components (PM) in the fluid and are formed to have a tendency that the thickness of the capturing layers 24 on the partition portion 22 decreases from an outer peripheral region of the honeycomb filter included in an orthogonal plane orthogonal to the channels toward a central region of the honeycomb filter included in the orthogonal plane. The partition portion 22 of the honeycomb filter 20 is formed such that the cells 23 having one end open and the other end sealed and the cells 23 having one end sealed and the other end open are arranged alternately. According to this honeycomb filter 20, exhaust gas entering the cell 23 from the inlet side passes through the capturing layers 24 and the partition portion 22, and the cell 23 at the outlet side to be discharged. Meanwhile, PM contained in the exhaust gas is captured on the capturing layer 24.

The external shape of the honeycomb filter 20 is not particularly limited and may be a cylindrical shape, a rectangular prism shape, an elliptic cylindrical shape, a hexagonal prism shape, or the like. The cross-sectional shape of the cell 23 may be rectangular, triangular, hexagonal, circular, elliptic, or the like. In this description, the case where the external shape of the honeycomb filter 20 is cylindrical and the cross-sectional shape of the cell 23 is rectangular is mainly described.

The partition portion 22 is porous and may be formed by containing at least one inorganic material selected from cordierite, Si-bonded SiC, recrystallized SiC, aluminum titanate, mullite, silicon nitride, SiAlON, zirconium phosphate, zirconia, titania, alumina, and silica. Among these, cordierite, Si-bonded SiC, recrystallized SiC, and the like are preferable. The porosity of the partition portion 22 is preferably 30 vol% or more and 85 vol% or less and more preferably 35 vol% or more and 65 vol% or less. The porosity refers to a result determined by a mercury penetration method. The average pore diameter of the partition portion 22 is preferably in the range of 10 µm or more and 60 µm or less. The average pore diameter refers to a result determined by a mercury penetration method. The thickness of the partition portion 22 is preferably 200 µm or more and 600 µm or less and more preferably 200 µm or more and 400 µm or less. At a thickness 200 µm or more, the mechanical strength can be enhanced and at a thickness of 600 µm or less, the pressure loss can be further decreased. When the partition portion 22 is formed to have such porosity, average pore diameter, and thickness, exhaust gas passes smoothly and PM can be easily captured and removed.

The capturing layer 24 is a layer that captures and removes PM in exhaust gas. The average pore diameter of the capturing layer 24 is preferably 2 µm or more and 8 µm or less, the porosity is preferably 40 vol% or more and 80 vol% or less, and the average particle diameter of particles constituting the capturing layer is preferably 1 µm or more and 15 µm or less. At an average pore diameter of 2 µm or more, the pressure loss in the early stage where PM is not deposited can be suppressed from becoming excessively large. At an average pore diameter of 8 µm or less, the capturing efficiency is improved, PM can be suppressed from passing through the capturing layer 24 and reaching inside the pore, and the degradation of the pressure loss-decreasing effect during PM deposition can be suppressed. At a porosity of 40 vol% or more, the pressure loss in the early stage where PM is not deposited can be suppressed from becoming excessively large, and at a porosity of 80 vol% or less, a durable surface layer can be manufactured as the capturing layer 24. When the average particle diameter of the particles constituting the capturing layer is 1 µm or more, large enough spaces can be sufficiently ensured between the particles constituting the capturing layer and thus the permeability of the capturing layer can be maintained and a rapid increase in pressure loss can be suppressed. When the average particle diameter is 15 µm or less, there are sufficient contact points between the particles and thus the bonding strength between the particles can be sufficiently ensured and the peeling strength of the capturing layer can be ensured. In this way, maintenance of high PM capturing efficiency, prevention of rapid pressure loss increase immediately after start of PM capture, decreasing the pressure loss during PM deposition, and durability of the capturing layer can be realized. Here, the average pore diameter and porosity of the capturing layer 24 are determined by image analysis by scanning electron microscope (SEM) observation, details of which are described below.

The capturing layers 24 are formed to have a tendency that the thickness of the capturing layer 24 on the partition portion 22 decreases from an outer peripheral region of the honeycomb filter 20 included in an orthogonal plane orthogonal to the cells 23 toward a central region of the honeycomb filter included in this orthogonal plane. In other words, the capturing layers 24 may be formed on the partition portion 22 to have a first thickness in the outer peripheral region and a second thickness smaller than the first thickness in the central region. As shown in Fig. 1, exhaust gas flowing in the pipe has a flow velocity distribution in which the flow velocity is larger at the central region side than at the outer peripheral region side of the honeycomb filter 20. Since the thickness of the capturing layers at the central region side tends to be smaller, exhaust gas is led to flow at the central region side, and capturing PM on the more outer peripheral region side can be suppressed. Accordingly, the outer side, which is less likely to burn and remove the solid components, is made less likely to capture the solid components, and a central side, which is easy to burn and remove the solid components, is easy to capture more solid components. Therefore, captured solid components on the honeycomb filter can be more efficiently removed.

The phrase "tendency that the thickness decreases from an outer peripheral region toward a central region" means that the thickness may remain the same or may increase in some portions from the outer peripheral region toward the central region as long as the orthogonal plane as a whole exhibits a general tendency that the thickness in the central portion is smaller. The capturing layers 24 may be formed so that the thickness on the partition portion 22 may gradually decrease from the outer peripheral region toward the central region of the honeycomb filter 20 or so that the thickness on the partition portion 22 may decrease stepwise from the outer peripheral region toward the central region of the honeycomb filter 20. Moreover, as shown in Fig. 2, the thickness of the capturing layers 24 may have a tendency to decrease at the central region side in a cylindrical manner to conform with the cross-sectional shape of the honeycomb filter 20 as shown in Fig. 2(a). Alternatively, as shown in Fig. 2(b), the thickness may decrease at the central region side by taking a shape different from the cross-sectional shape of the honeycomb filter 20, e.g., a rectangular prism shape.

The "central region" of the honeycomb filter 20 having an integral structure may be a region that includes a cell 23 arranged at the center of the honeycomb filter 20. The "outer peripheral region" may be a region that includes cells arranged along the outer periphery, the cells including the outermost complete cells up to three cells inward from the outermost complete cells. Next, the method for calculating the thickness of the capturing layer 24 of the honeycomb filter 20 having an integral structure is described. As shown in Fig. 3, in an orthogonal plane orthogonal to the cells 23, the thickness in the central region is determined by measuring the thicknesses of four cells near the center of the honeycomb filter 20 and averaging the results. The thickness in the outer peripheral region is determined by selecting 8 cells along the outer periphery from the cells including the outermost complete cells up to three cells inward from the outer most complete cells, measuring the thickness of each cell, and averaging the results. Furthermore, for example, this measurement is conducted at a position 20% from the upstream-side-end face of the honeycomb filter 20 in the axial direction (direction in which the cells 23 are formed), the center position, and the position 20% from the downstream-side-end face and the average of the results is determined to be the thickness. The thickness of the capturing layer 24 is determined by image analysis by SEM observation of a cross-section of the partition portion 22 (refer to Fig. 4). First, a region having a thickness half the thickness of the partition portion 22 is divided in the thickness direction into one thousand or more square regions. Next, the space/solid area ratio in an image is determined from the regions close to the surface and this ratio is assumed to be the porosity in those square regions. Next,
as shown in Fig. 5, the obtained porosity is plotted versus the distance from the surface. Here, the average of the 20 views is plotted for every distance as the porosity at that distance. Then the average of three points near the surface other than the point closest to the surface is determined and the result is assumed to be the porosity X of the surface layer. The average of the space/solid area ratio of 20 views in an image is determined at a position sufficiently far from the surface, i.e., the central region of the partition portion 22, and the determined average is assumed to be the porosity Y of the partition portion 22. The position (distance from the surface) at which a straight line indicating the arithmetic mean of the porosity X and the porosity Y intersects a straight line connecting the plotted points is assumed to be the thickness of the partition portion 22. The average pore diameter of the capturing layers 24 is determined by image analysis by the SEM observation. As shown in Fig. 4, circles inscribing structures of a capturing layer 24 are drawn in gap regions of the capturing layer 24 in an image obtained by SEM observation. The inscribed circles are drawn in the gap regions so that the diameter thereof is maximized, and the average of the diameters of the inscribed circles drawn in the observed image range is assumed to be the average pore diameter.

The ratio of the thickness of the capturing layers 24 in the central region of the honeycomb filter 20 to that in the outer peripheral region of the honeycomb filter 20 is 60% or more and 95% or less and more preferably 70% or more and 90% or less. When this ratio is 60% or more, the pressure loss can be further reduced. When this ratio is 95% or less, the PM regeneration efficiency can be further improved. The thickness of the capturing layer 24 is, for example, 1 µm or more and 180 µm or less, more preferably 6 µm or more and 90 µm or less, and most preferably 10 µm or more and 50 µm or less. The thickness of the capturing layers 24 is preferably 0.5% or more and 30% or less and more preferably 3% or more and 15% or less of the thickness of the partition portion 22. When the thickness of the capturing layers 24 is 0.5% or more of the thickness of the partition portion 22, the PM capturing efficiency can be enhanced. When the thickness is 30% or less, the pressure loss can be further reduced. The PM regeneration efficiency is enhanced by utilizing the central region by decreasing the thickness of the capturing layers 24 in the central region. In the case where the thickness of the capturing layers 24 in the outer peripheral region is thick, the pressure loss sometimes increases due to the decreased capturing performance in the outer peripheral region and resulting penetration of PM into the partition portion 22. Accordingly, the thickness of the capturing layers 24 in the central region is preferably adequately set in the above-described range by considering the relationship between the regeneration efficiency value of the honeycomb filter 20 as a whole and the value of pressure loss after PM deposition. The capturing layers 24 may be formed on the partition portion 22 at the inlet side and the outlet side of the exhaust gas. However, as shown in Fig. 1, the capturing layers 24 are preferably formed on the partition portion 22 at the inlet side of exhaust gas and not at the outlet side of the exhaust gas. According to this arrangement, the pressure loss can be reduced while PM in the fluid can be efficiently removed. Moreover, this also facilitates manufacture of the honeycomb filter 20. The capturing layers 24 more preferably contain 70 wt% or more of ceramic or metal inorganic fibers. In this manner, PM can be easily captured with the fibers. The inorganic fibers of the capturing layers 24 can contain at least one material selected from aluminosilicate, alumina, silica, zirconia, ceria, and mullite and preferably contain aluminosilicate among these.

The partition portion 22 and the capturing layer 24 of the honeycomb filter 20 preferably support a catalyst. The catalyst preferably contains at least one element selected from noble metal elements and group 6 and 8 elements in the periodic table. The honeycomb filter 20 may support other catalysts and depurative agents. Examples thereof include a NOₓ-occluding catalyst containing an alkali metal (Li, Na, K, Cs, etc.) or an alkaline earth metal (Ca, Ba, Sr, etc.), at least one rare earth element, a transition metal, a three-way catalyst, a promoter such as an oxide of cerium (Ce) and/or zirconium (Zr), and a hydrocarbon (HC) absorber. In particular, examples of the noble metal include platinum (Pt), palladium (Pd), rhodium (Rh), gold, and silver. Examples of the rare earth metal include Sm, Gd, Nd, Y, La, and Pr. Examples of the alkaline earth metal include Mg, Ca, Sr, and Ba. Examples of the transition metal contained in a catalyst include Mn, Fe, Co, Ni, Cu, Zn, Sc, Ti, V, and Cr. Among these, platinum and palladium are more preferable. As a result, PM captured on the capturing layers 24 can be easily removed.

The cell density of the honeycomb filter 20 is preferably 15 cells/cm² or more and 65 cells/cm² or less. The pressure loss during PM deposition decreases with the increase in filtration area. On the contrary, the initial pressure loss increases when the cell diameter is small. Accordingly, the cell density and the thickness of the partition portion 22 may be set by considering the trade-off among the initial pressure loss, pressure loss during PM deposition, and the PM capturing efficiency.

The thermal expansion coefficient of the honeycomb filter 20 in a direction of through holes in the cells 23 at 40°C to 800°C is preferably 6.0 x 10⁻⁶/°C or less, more preferably 1.0 x 10⁻⁶/°C or less, and most preferably 0.8 x 10-⁶/°C or less. When the thermal expansion coefficient is 6.0 x 10⁻⁶/°C or less, the thermal stress generated during exposure to high-temperature exhaust gas can be suppressed within an allowable range.

Next, the method for manufacturing the honeycomb filter 20 is described. The method for manufacturing the honeycomb filter 20 may include a partition portion forming step of forming a porous partition portion 22 that forms a plurality of cells each having one end open and the other end sealed and functioning as a channel of a fluid; and a capturing layer forming step of forming capturing layers 24 that capture and remove PM in exhaust gas so that the thickness of the capturing layers 24 on the partition portion 22 has a tendency to decrease from an outer peripheral region of the honeycomb filter 20 toward a central region of the honeycomb filter, the central region and the outer peripheral region being included in an orthogonal plane orthogonal to the cells 23. Preferably, a catalyst supporting step of supporting a catalyst on the honeycomb filter 20 is carried out.

In the partition portion forming step of this method for manufacturing a honeycomb filter, materials for the partition portion 22 are mixed and formed into a partition portion 22 by a particular forming method. Here, the partition portion 22 is formed along with the formation of a honeycomb-form body which is a formed body before formation of the capturing layers 24 and before baking. A puddle or a slurry may be prepared as the material for the partition portion 22 by, for example, mixing a base material, a pore-forming agent, and a dispersion medium. The above-described inorganic materials can be used as the base material. For example, when SiC is used as the base material, SiC powder and metallic Si powder are mixed with each other at a mass ratio of 80:20, a dispersion medium such as water and a pore-forming agent are added to the mixture, an organic binder or the like is added thereto, and the resulting mixture is kneaded to form a plastic puddle. The means for preparing a puddle by kneading SiC powder and a metallic Si powder material (forming material) is not particularly limited. Examples thereof include a method that uses a kneader or a vacuum auger machine. The pore-forming agent is preferably one that burns by the subsequent baking; for example, starch, coke, a foaming resin, or the like can be used. A binder, a dispersing agent, or the like can be added to the puddle as needed. An organic binder such as a cellulose binder is preferably used as the binder. A surfactant such as ethylene glycol can be used as the dispersing agent. The partition portion 22 may be formed as a honeycomb formed body by extrusion forming using a die having a shape of arranged cells 23 so that the honeycomb formed body has a desired shape. Subsequently, a process of forming sealing portions 26 in the honeycomb formed body is carried out. The sealing portions 26 are preferably formed so that cells 23 having one end open and the other end sealed and cells 23 having one end sealed and the other end open are alternately arranged. The material used for sealing may be a material used for forming the partition portion 22. The resulting honeycomb formed body is preferably subjected to a drying process, a calcining process, and a baking process. The calcining process is a process of burning and removing organic matter contained in the honeycomb formed body at a temperature lower than the baking temperature. The baking temperature can be 1400°C to 1450°C for a cordierite material and 1450°C for Si-bonded SiC. A honeycomb structure before formation of the capturing layers 24 can be manufactured through these processes.

In the capturing layer forming step of the method for manufacturing the honeycomb filter, the capturing layers 24 may be formed by preparing a slurry containing materials for the capturing layers 24 and supplying the slurry to the cells 23. The slurry may be prepared mixing inorganic fibers, a binding material, a binder, and a dispersion medium as the materials for the capturing layer 24, for example. Alternatively, inorganic particles, a binding material, a binder, and a dispersion medium may be mixed as the materials for the capturing layers 24 to prepare a slurry. The inorganic fibers described above can be used, and inorganic fibers having an average diameter of 0.5 µm or more and 8 µm or less and an average length of 100 µm or more and 500 µm or less are preferable. Particles of the above-described inorganic materials can be used as the inorganic particles. For example, when SiC is the base material, SiC particles having an average particle diameter of 0.1 µm or more and 30 µm or less can be used. Colloidal silica, clay, or the like can be used as the binding material. An organic binder such as a cellulose binder is preferably used as the binder. A surfactant such as ethylene glycol can be used as the dispersing agent. Note that the average particle diameter is the median diameter (D50) measured with a laser diffraction/scattering particle diameter distribution analyzer with water as a dispersion medium.

In the capturing layer forming step, in forming the capturing layers 24 so that the thickness decreases from the outer peripheral region toward the central region of the honeycomb filter 20, the supply amount of the slurry containing materials for forming the capturing layers 24 may be decreased at the central side or a low-concentration slurry may be supplied to the central side. An example of a method for decreasing the supply of slurry is to place a supply adjusting plate near the inlet of the cell 23 and adjust the distance between the supply adjusting plate and the inlet of the cell 23. According to this method, capturing layers 24 having a thickness gradually decreasing toward the central region can be formed. When a low-concentration slurry is to be used, for example, a step of forming capturing layers 24 by using a higher-concentration slurry in the outer peripheral region of the orthogonal plane of the honeycomb filter 20, sealing the cells 23 having the capturing layers 24, and forming the capturing layer 24 by using a slurry having a next concentration level may be repeated. According to this method, capturing layers 24 having a thickness decreasing stepwise toward the central region can be formed. In forming the capturing layers 24, solid components contained in the slurry may be formed on the partition portion 22 by suctioning the slurry from the outlet side of the cell 23 or solid components contained in the slurry may be formed on the partition portion 22 by pumping the slurry from the inlet side of the cell 23. The latter is more preferable since the thickness of the capturing layer 24 can be made more uniform. The ratio of the thickness of the capturing layers 24 in the central region of the honeycomb filter 20 to the thickness in the outer peripheral region of the honeycomb filter 20 is 60% or more and 95% or less and more preferably 70% or more and 90% or less. When this ratio is 60% or more, the pressure loss can be further reduced, and when this ratio is 95% or more, the PM regeneration efficiency can be further improved. The thickness of the capturing layers 24 in the outer peripheral region is preferably 5 µm or more and 100 µm or less and more preferably 10 µm or more and 50 µm or less. The capturing layers 24 are preferably dried and heat-treated after forming layers of materials on the partition portion 22 to fix the layers. The temperature of the heat treatment is, for example, preferably 200°C or more and 900°C or less and more preferably 650°C or more and 750°C or less. At a heating temperature of 200°C or more, organic matter contained can be sufficiently removed and at a heating temperature of 900°C or less, the decrease in the number of pores can be suppressed.

The capturing layer forming step may be a step of forming capturing layers by supplying gas containing materials for the capturing layers to the inlet cell while using the gas (air) as the carrier medium of the materials for the capturing layer. Inorganic fibers or inorganic particles may be used as the materials for the capturing layers. Inorganic fibers described above can be used. For example, inorganic fibers having an average diameter of 0.5 µm or more and 8 µm or less and an average length of 100 µm or more and 500 µm or less are preferable. Particles of the above-described inorganic materials can be used as the inorganic particles. For example, SiC particles or cordierite particles having an average particle diameter of 1 µm or more and 15 µm or less can be used. Along with inorganic fibers or inorganic particles, a binding material may be supplied. The binding material can be selected from sol materials and colloidal materials and preferably colloidal silica is used. In the capturing layer forming step, during formation of capturing layers having a thickness decreasing from the outer peripheral region toward the central region of the honeycomb filter, the flow rate of a gas medium containing materials for forming the capturing layers may be reduced at the central side. An example of a method for reducing the flow rate of the gas medium is to place a flow rate adjusting plate near the inlet of the cell and adjust the outer diameter size of the flow rate adjusting plate or the distance between the flow rate adjusting plate and the inlet of the cell. According to this method, capturing layers having a thickness gradually decreasing toward the central region can be formed. The capturing layers are preferably bonded by heat treatment after formation of the material layers on the partition portion. The temperature of the heat treatment is, for example, preferably 650°C or more and 1350°C or less. When the heat treatment temperature is 650°C or more, a sufficient bonding force can be ensured and when the heat treatment temperature is 1350°C or less, clogging of pores due to excessive oxidation of particles can be suppressed.

### [Catalyst supporting step]

In the method for manufacturing the honeycomb filter 20, a catalyst supporting step of supporting a catalyst on the partition portion 22 or the capturing layers 24 is preferably carried out. The catalyst is preferably supported on the capturing layers 24. The catalyst is supported on the capturing layer 24 by mixing a catalyst component to the material for the capturing layers 24 or by forming the capturing layers 24 on the partition portion 22 and then supporting the catalyst on the capturing layers 24. Examples of the component supported on the capturing layers 24 include, as described above, a NOₓ-occluding catalyst, at least one rare earth element, a transition metal, a three-way catalyst, a promoter such as an oxide of cerium (Ce) and/or zirconium (Zr), and a hydrocarbon (HC) absorber. The method of supporting the catalyst component such as an oxide catalyst, a NOₓ-occluding catalyst, or the like is not particularly limited. An example thereof is a method including wash-coating the capturing layers 24 of the honeycomb structure with a catalyst solution containing a catalyst component and baking the solution by heat treatment at a high temperature. Alternatively, for example, a catalyst supporting layers may be formed by applying a ceramic slurry to the partition of the honeycomb-structured base member by using a known ceramic film forming method such as a dipping method, and drying and baking the applied slurry. In this method, the thickness of the catalyst supporting layers can be adjusted to a desired value by controlling the concentration of the catalyst coat slurry, the time required for supporting the catalyst, etc. Note that in order to have a catalyst component such as an oxide catalyst, a NOₓ-occluding catalyst, or the like supported in a highly dispersed state, the catalyst may be temporarily supported on a heat-resistant inorganic oxide, such as alumina, having a large specific surface and then supported on the partition or the like of the honeycomb structure. The catalyst may be formed by, for example, applying a known catalyst supporting method such as a suction method by which a catalyst slurry is supported on the partition and/or in the pores of the PM capturing layers and dried and baked.

The effects of the honeycomb filter 20 obtained thorough the above-described steps will now be described. When the capturing layers are formed at a uniform thickness, as shown in Fig. 6(b), the amount of exhaust gas flowing in the central region is large as with the flow velocity distribution of the exhaust gas, and thus the amount of captured PM is high in the central region, but PM is captured in outer peripheral region of the honeycomb filter. Note that in Fig. 6, each shaded region represents a portion in which PM has deposited. In contrast, according to the above-described honeycomb filter 20, as shown in Fig. 6(a), since the thickness of the capturing layers 24 in the central side tends to be small, more exhaust gas flows at the central side, and exhaust gas is not easy to flow at the outer peripheral side. Thus the amount of captured PM becomes small distribution on the more outer side, and the amount of captured PM becomes large distribution on a more central side. Here, when the regeneration process is executed, and PM is burnt, an exhaust temperature is likely to become higher on the central region side as with the flow velocity distribution of the exhaust gas, and thus PM is burnt easily and the amount of a decrease of PM grows on a more central region side. When the capturing layers have a uniform thickness, as shown in Fig. 6(b), it needs longer regeneration time if complete reproduction is performed because PM tends to remain in the outer peripheral region. However, according to the honeycomb filter 20 described above, as shown in Fig. 6(a), the regeneration process can be ended at shorter regeneration time because the amount of captured PM in the outer peripheral region is a small. Thus, the captured PM can be removed more efficiently, and fuel cost can be improved more by making the regeneration time shorter.

### [Second Embodiment]

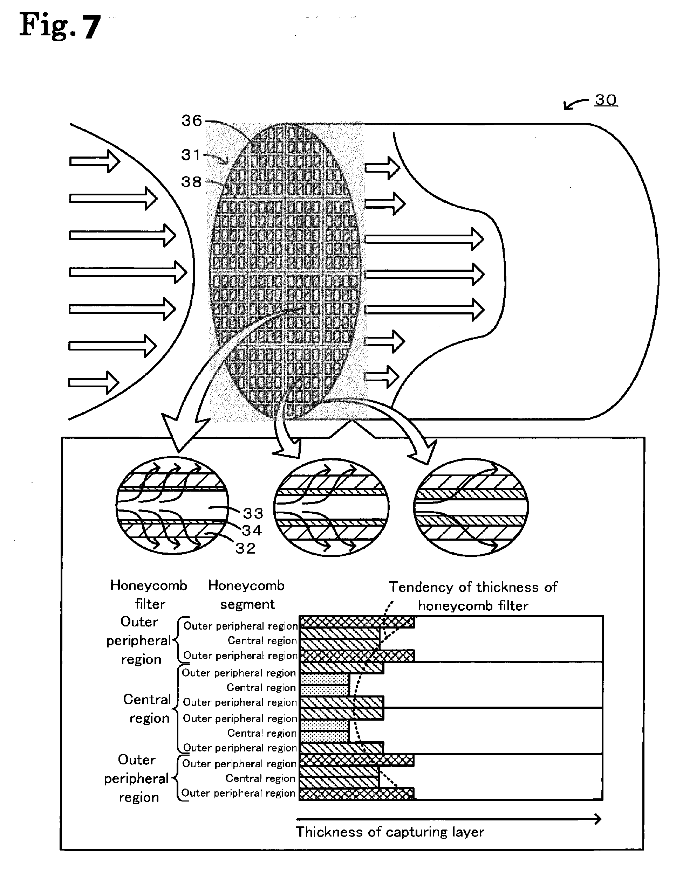

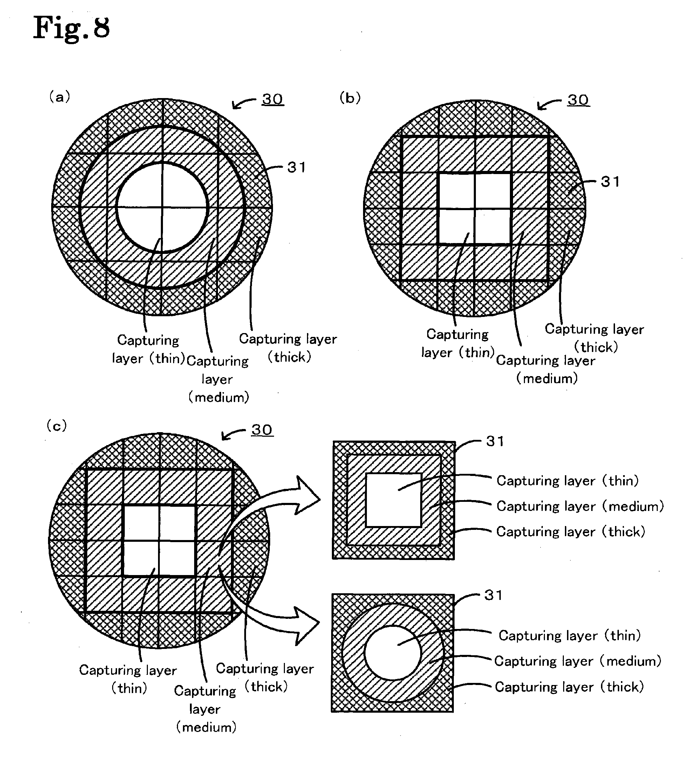

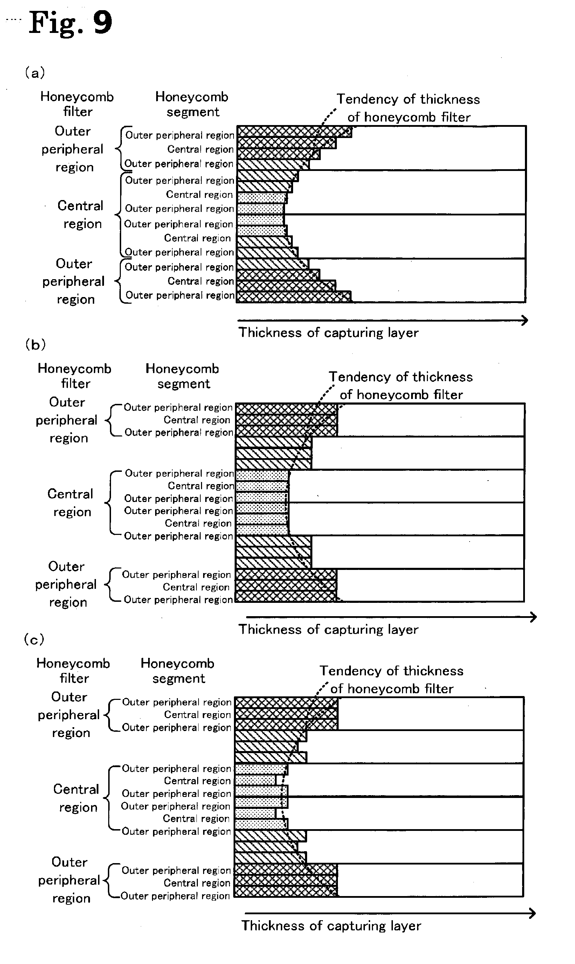

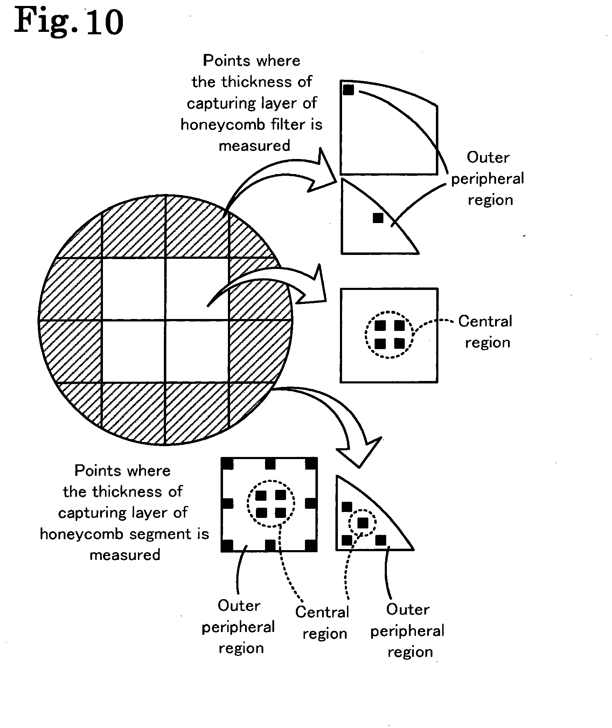

A honeycomb filter having honeycomb segments (structures) bonded with one another is described as a second embodiment. Fig. 7 is a schematic diagram illustrating an example of a configuration of a honeycomb filter 30; Fig. 8 is a diagram illustrating an example of the thickness of capturing layers 34; Fig. 9 is a diagram illustrating an example of the thickness of capturing layers; and Fig. 10 is a diagram illustrating an example of points where the thickness of the capturing layer 34 is measured. As shown in Fig. 7, the honeycomb filter 30 is formed by bonding two or more honeycomb segments 31, each having a partition portion 32, by bonding layers 38. The partition portion 32, cells 33, and sealing portions 36 of the honeycomb filter 30 are the same as the partition portion 22, the cells 23, and the sealing portions 26 of the honeycomb filter 20, and thus the basic description therefor is omitted. Note that the material and the forming method of the capturing layer 34 may be the same as those of the capturing layer 24 of the honeycomb filter 20. In this honeycomb filter 30 also, the capturing layers 34 are formed on the partition portions 32 so that the thickness of the capturing layers 34 has a tendency to decrease from the outer peripheral region toward the central region of the honeycomb filter, the central region and the outer peripheral region being included in an orthogonal plane orthogonal to the cells 33. The capturing layers 34 in the outer peripheral region of the honeycomb filter are formed on the partition portion 32 to have a first thickness and the capturing layers 34 in the central region are formed on the partition portion 32 to have a second thickness smaller than the first thickness. In this manner, the captured PM can be removed more efficiently by the honeycomb filter 30 including the honeycomb segments 31 bonded with one another.

According to this honeycomb filter 30, as shown in the lower part of Fig. 7, the capturing layers 34 are formed to have a small thickness in the central region of the honeycomb filter 30. In addition, the capturing layers 34 of each honeycomb segment 31 are formed on the partition portion 32 so that the thickness thereof has a tendency to decrease from the outer peripheral region toward the central region of the honeycomb segment 31, the central region and the outer peripheral region being included in the orthogonal plane. In this manner, exhaust gas is led to flow toward the central side on a honeycomb segment 31 basis, it is easy to capture PM in a central region that becomes a higher temperature when regeneration process is performed, and thus captured PM in the honeycomb segment 31 can be removed more efficiently. The honeycomb filter 30 preferably includes at least one honeycomb segment 31 in which the capturing layers 34 are formed so that the thickness thereof has a tendency to decrease from the outer peripheral region toward the central region of the honeycomb segment 31. More preferably, all of the honeycomb segments 31 have such a tendency. As shown in Fig. 7, all honeycomb segments 31 of the honeycomb filter 30 have this thinning tendency in the central region. In the honeycomb segment 31, the ratio of the thickness of the capturing layers 34 in the central region to the thickness in the outer peripheral region is preferably 70%
or more and 95% or less. The thickness of the capturing layers 34 in the outer peripheral region is, for example, preferably 5 µm or more and 100 µm or less and more preferably 10 µm or more and 50 µm or less.

The tendency of the thickness of the capturing layers 34 is irrelevant to the shape of the honeycomb segment 31, as shown in Fig. 8(a), and the thickness may decrease in a cylindrical manner at the central region side to conform with the cross-sectional shape of the honeycomb filter 30. Alternatively, as shown in Fig. 8(b), the thickness may decrease at the central region side in a manner that takes a shape different from the cross-sectional shape of the honeycomb filter 30, e.g., the thickness may decrease on a honeycomb segment 31 basis. Still alternatively, as shown in Fig. 8(c), the thickness of the capturing layers 34 may have a tendency to decrease at the central region side in the honeycomb filter 30 and the thickness of the capturing layers 34 may have a tendency to decrease at the central region side also in the honeycomb segment 31. In this honeycomb segment 31, the thickness at the central region side may decrease in a rectangular prism shape that conforms with the cross-sectional shape of the honeycomb segment 31, or the thickness at the central region side may decrease in a shape (such as a cylindrical shape) different from the cross-sectional shape of the honeycomb segment 31. As shown in Fig. 9(a), the thickness of the capturing layers in a cross-section taken in parallel to the cells may gradually decrease toward the central region in a honeycomb filter as a whole, or, as shown in Fig. 9(b), capturing layers of a uniform thickness may be formed in one honeycomb segment but the thickness of the capturing layers in the honeycomb filter as a whole may decrease stepwise toward the central region side. Alternatively, as shown in Fig. 9(c), honeycomb segments in which capturing layers of a uniform thickness are formed and honeycomb segments in which thinner capturing layers are formed in the central side of the honeycomb segments may be combined and bonded so that the thickness of the capturing layers tends to decrease toward the central region side in the honeycomb filter as a whole.

The "central region" of the honeycomb filter 30 having the bonded structure may be a region that includes the cell 33 at the center of the honeycomb segment 31 disposed at the center of the honeycomb filter 30. The "outer peripheral region" may be a region that includes cells that are included in the honeycomb segments 31 forming the outer periphery of the honeycomb filter 30 and are positioned along the outer periphery in the range of from the outer-most complete cells to three cells inward therefrom. The method for calculating the thickness of the capturing layers 34 of the honeycomb filter 30 having a bonded structure will now be described. As shown in Fig. 10, the thickness in the central region in an orthogonal plane orthogonal to the cells 33 is determined by measuring the thickness of four cells disposed at the center of the honeycomb segment 31 disposed near the center of the honeycomb filter 30 and averaging the results. The thickness in the outer peripheral region is determined by selecting eight cells along the outer periphery among the cells positioned in the range of from the outer-most complete cells to three cells inward therefrom, measuring the thickness of these eight cells, and averaging the results. Furthermore, for example, measurement is conducted at a position 20% from the upstream-side-end face of the honeycomb filter 20 in the axial direction (direction in which the cells 23 are formed), the center position, and the position 20% from the downstream-side-end face and the average of the results is determined to be the thickness. The "central region" and the "outer peripheral region" of the honeycomb segment 31 in the honeycomb filter 30 are, as with the honeycomb filter 20, the average of 4 cells positioned near the center of each segment and the average of 8 cells in the outermost periphery in the case of segments from which the outer periphery is not removed. In contrast, in the case of segments from which the outer periphery is removed, the average of 4 cells positioned near the center-of-gravity of the segment is determined as the value of the central region and the average of the outermost periphery cells of the unremoved outer periphery is determined as the value of the outer peripheral region.

Next, a method for manufacturing the honeycomb filter configured by bonding honeycomb segments is described. The method for manufacturing the honeycomb filter includes, for example, a segment making step of making honeycomb segments each including a porous partition portion that forms a plurality of cells each having one end open and the other end sealed; a bonding step of bonding the resulting honeycomb segments by a bonding layer to obtain a honeycomb bonded body; and a capturing layer forming step of forming capturing layers on the partition portions of the honeycomb bonded body obtained by bonding so that thickness of the capturing layers has a tendency to decrease from an outer peripheral region of a honeycomb filter toward a central region of the honeycomb filter, the central region and the outer peripheral region being included in an orthogonal plane orthogonal to the cells. Alternatively, the method may include a segment making step of making honeycomb segments each having a porous partition portion that forms a plurality of cells each having one end open and the other end sealed; a capturing layer forming step of forming capturing layers on the partition portions under a plurality of conditions so that honeycomb segments with capturing layers having different thickness are formed; and a bonding step of bonding two or more of the honeycomb segments having capturing layers of a plurality of thickness so that the thickness has a tendency to decrease in a central region of a honeycomb filter. In the capturing layer forming step, capturing layers may be formed on the partition portions of the honeycomb segments so that the thickness has a tendency to decrease from the outer peripheral region of the honeycomb segment toward the central region of the honeycomb segment. The catalyst supporting step described above is preferably carried out.

In this manufacturing method, in the segment making step, the same process as the formation of the honeycomb formed body by the partition portion forming step described above may be carried out. Here, the honeycomb segments are preferably formed into a shape that has a flat bonding surface, e.g., a rectangular prism shape. In this manufacturing method, the same process as the capturing layer forming step described above may be carried out in the capturing layer forming step. In the method for manufacturing the honeycomb filter 30, the capturing layer forming step is carried out under a plurality of conditions to form honeycomb segments 31 for the outer peripheral region of the honeycomb filter 30, in which the thickness of the capturing layers tends to be large, and honeycomb segments 31 for the central region of the honeycomb filter 30, in which the thickness of the capturing layers tends to be small. In the capturing layer forming step, the ratio of the thickness in the central region of the honeycomb segment 31 to the thickness in the outer peripheral region of the honeycomb segment 31 is preferably in the range of 70% or more and 95% or less. The thickness of the capturing layers 34 in the outer peripheral region is, for example preferably 5 µm or more and 100 µm or less and more preferably 10 µm or more and 50 µm or less. In the capturing layer forming step for the honeycomb filter formed by bonding a plurality of honeycomb segments 31, capturing layers may be formed in the segments before the bonding. In such a case, gas with various amounts of materials for capturing layers may be supplied to the honeycomb segments 31 or the time of supplying gas containing the same amounts of materials for the capturing layers may be adjusted to prepare honeycomb segments having capturing layers with different thickness, and the segments may be arranged and bonded with each other so that the thickness of the capturing layers is larger in the central segments than in the outer peripheral segments. In the capturing layer forming step, capturing layers may be formed in the segments after bonding. In such a case, gas containing materials for capturing layers is supplied only to segment portions constituting the central region while masking segment portions constituting the outer periphery of the honeycomb filter so that the gas containing material for the capturing layers is not supplied, and then a smaller amount of gas than that of the gas containing materials for capturing layers supplied to the segments constituting the center is supplied only to the segments at the other peripheral side while masking only the segment portions constituting the center so as to form capturing layers having a thickness larger in the central segments than in the outer peripheral segments. Depending on the number of constitutional segments, the step of forming regions that form capturing layers, i.e., the step of forming capturing layers, may be conducted two or more times so that the thickness of the capturing layers decreases stepwise from the segments constituting the center side toward the segments constituting the outer peripheral side.

In the bonding step of this method for manufacturing the honeycomb filter, first, inorganic fibers, a binding material, inorganic particles, a pore forming agent, an organic binder, a dispersion medium, a dispersing agent, and the like are mixed to prepare a paste-like bonding material. The above-described materials can be used as the inorganic fibers, the pore forming agent, the organic binder, the dispersion medium, and the dispersing agent. The above-described inorganic materials can be used as the inorganic particles. Colloidal silica, clay, or the like can be used as the binding material. The bonding material is preferably applied to a surface of a honeycomb segment in the range of 0.5 mm or more and 2 mm or less. The process of placing another honeycomb segment on this applied surface is repeated to make a honeycomb segment stack constituted by two or more honeycomb segments, and the entirety is preferably bonded by applying a pressure from outside. The resulting honeycomb segment stack is preferably subjected to drying and heat treatment at a particular temperature. In this manner, the bonding strength can be further improved.

In this method for manufacturing the honeycomb filter, when a honeycomb filter is manufactured through the segment making step, the bonding step, and the capturing layer forming step performed in that order, the thickness of the capturing layers gradually decreases toward the central region in the honeycomb filter as a whole (refer to Fig. 9(a)). When a honeycomb filter is manufactured through the segment making step, the capturing layer forming step, and the bonding step performed in that order, the thickness of capturing layers decreases stepwise toward the central region of the honeycomb filter (refer to Fig. 7 and Fig. 9(b), (c)). According to the honeycomb filter manufactured by this method, since the thickness of the capturing layers at the central side tends to be small, exhaust gas is led to flow toward the central side, more exhaust gas can flow at the central side, and more PM can be captured and removed at the central side. Accordingly, captured PM on the honeycomb filter can be more efficiently removed.

### [Third Embodiment]

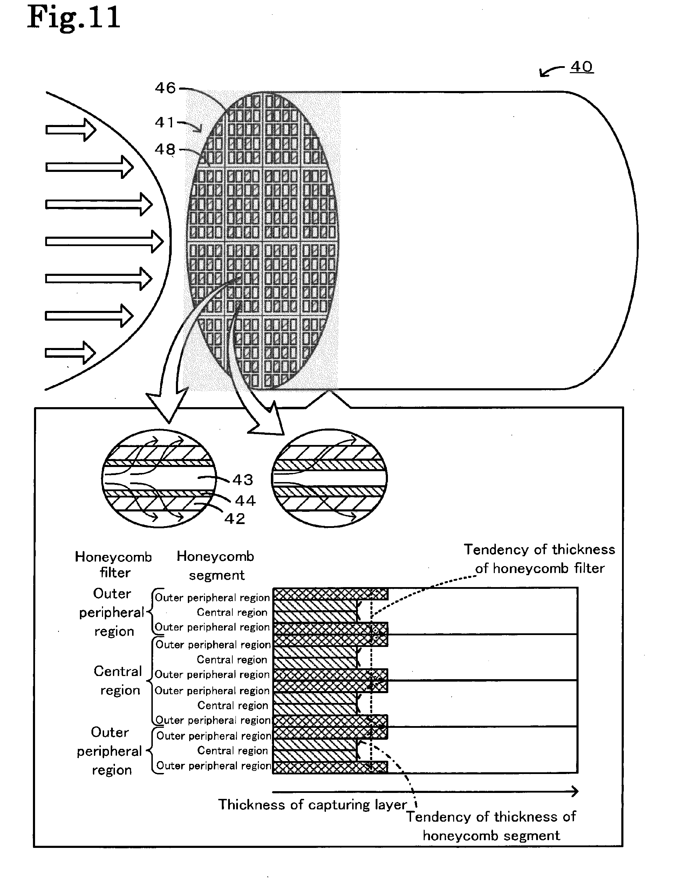

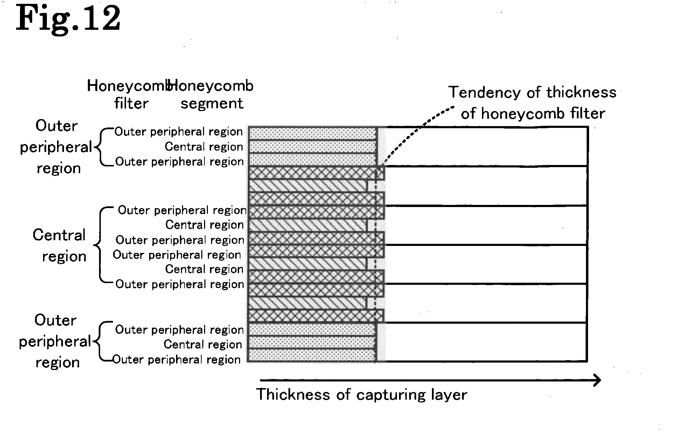

A honeycomb filter constituted by honeycomb segments (structures) bonded with one another and in which capturing layers having a uniform thickness are formed in the honeycomb filter as a whole is described as a third embodiment. Fig. 11 is a schematic diagram illustrating an example of a configuration of a honeycomb filter 40 and Fig. 12 is a diagram illustrating an example of the thickness of capturing layers. As shown in Fig. 11, the honeycomb filter 40 is constituted by two or more honeycomb segments 41, each having a partition portion 42, bonded with one another by bonding layers 48. The partition portions 42, cells 43, sealing portions 46, and the bonding layers 48 of the honeycomb filter 40 are the same as the partition portions 32, the cells 33, the sealing portions 36, and the bonding layers 38 of the honeycomb filter 30, and thus the basic description therefor is omitted. Note that the material and the forming method of the capturing layers 44 may be the same as those of the capturing layers 24 of the honeycomb filter 20. Since the method for manufacturing the honeycomb filter 40 is the same as the method for manufacturing the honeycomb filter 30 except that uniform capturing layers are formed in the honeycomb filter as a whole, the description therefor is omitted. In the honeycomb filter 40, capturing layers 44 are formed on the partition portion 42 so that the thickness thereof has a tendency to decrease from an outer peripheral region toward a central region of the honeycomb segment 41 included in an orthogonal plane orthogonal to the cells 43. The capturing layers 44 on the partition portion 42 has a first thickness in the outer peripheral region of the honeycomb segment 41 and the capturing layers 44 on the partition portion 42 has a second thickness smaller than the first thickness in the central region. In this manner, in the honeycomb segment 41, the outer side, which is less likely to burn and remove PM, is made less likely to capture PM, and the central side, which is easy to burn and remove PM, is easy to capture more PM. Accordingly, captured PM can be more efficiently removed in the honeycomb segments 41, and captured PM can be more efficiently removed in the honeycomb filter 40.

In this honeycomb filter 40, the capturing layers 44 are formed on the partition portion 42 so that the thickness has a tendency to decrease in the central region in all of the honeycomb segments 41. Alternatively, as shown in Fig. 12, the honeycomb filter 40 may include at least one honeycomb segment in which the capturing layers are formed on the partition portion so that the thickness has a tendency to decrease in the central region. Here, this honeycomb filter preferably has a honeycomb segment, in which the capturing layer is formed on the partition portion so that the thickness tends to be small in the central region, at least in the central region of the honeycomb filter included in the orthogonal plane orthogonal to the cells. In this manner, the outer side, which is less likely to burn and remove PM, is made less likely to capture PM, and a central side, which is easy to burn and remove PM, is easy to capture more PM. Accordingly, captured PM can be more efficiently removed.

It should be understood that the present invention is not limited by the embodiments described above and various modifications are naturally possible within the technical scope of the present invention.

For example, although the fluid in the embodiments is exhaust gas, the fluid is not limited to this. Moreover, although a honeycomb filter placed in an engine pipe is described in the embodiments above, the honeycomb filter is not limited to this.

### Examples

Examples of actually manufacturing honeycomb filters are described below as Experimental Examples.

### [Manufacture of honeycomb segments]

Honeycomb segments used in manufacturing a honeycomb structure having a bonded structure were made. First, as the SiC material, SiC powder and metallic Si powder were mixed at a weight ratio of 80:20. A puddle was prepared by mixing 100 parts by weight of this mixed material of SiC, 13 parts by weight of a pore forming agent, 35 parts by weight of a dispersion medium, 6 parts by weight of an organic binder, and 0.5 parts by weight of a dispersing agent. Water was used as the dispersion medium, starch and a foaming resin were used as the pore forming agent, cellulose and hydroxypropyl methyl cellulose was used as the organic binder, and ethylene glycol was used as the dispersing agent. Next, the puddle was extrusion-formed by using a particular die to obtain a segment formed body having rectangular cells and a rectangular prism overall shape (structure making step). Here, the shape was formed so that the thickness of the partition portion was 310 µm, the cell density was 46.5 cells/cm² (300 cells/square inch), the length of one side of a cross-section was 35 mm, and the length was 152 mm. The segment formed body was dried with a microwave drier and further with a hot air drier to be completely dried, and two end faces of the segment formed body were cut to obtain a segment formed body with particular dimensions. Next, cell opening portions in one of the end faces of the segment formed body were alternately covered with a mask and the masked end face was dipped in a sealing slurry containing the SiC material so as to alternately form opening portions and sealing portions. The other end face was masked in the same manner and the sealing portions were formed so that cells each having one end open and the other end sealed and cells each having one end sealed and the other end open are arranged alternately. Subsequently, the segment formed body having the sealing portions was dried with a hot air drier and degreased in an air atmosphere at 400°C. Furthermore, baking was conducted in an Ar inert atmosphere at 1450°C for 2 hours to obtain a honeycomb segment mainly composed of SiC having SiC crystal particles bonded with Si.

### [Manufacture of honeycomb structure having a bonded structure]

Inorganic fibers, a binding material, inorganic particles, a pore-forming agent, an organic binder, a dispersion medium, a dispersing agent, etc., were mixed to prepare a paste-form bonding material. Here, aluminosilicate fibers were used as the inorganic fibers, colloidal silica and clay were used as the binding material, and SiC was used as the inorganic particles. A foaming resin was used as the pore-forming agent, CMC and PVA were used as the organic binder, and water was used as the dispersion medium. The step of applying the paste to the outer wall surface of a honeycomb segment prepared as above so that the applied paste has a thickness of 1 mm and placing another honeycomb segment on the applied surface was repeated to form a honeycomb segment stack constituted by 16 honeycomb segments, a pressure was applied from outside to bond the entirety, and drying was conducted at 140°C for 2 hours to obtain a honeycomb structure having a bonded structure (bonding step). The outer periphery of the honeycomb structure having the bonded structure was cut and a protective material was applied to the outer periphery after the cutting to obtain a bonded honeycomb structure having a cylindrical external shape (refer to Fig. 7). The honeycomb filter had a cell density of 46.5 cells/cm² (300 cells/square inch), a cross-sectional diameter of 144 mm, and a length of 152 mm.

### [Formation of capturing layers]

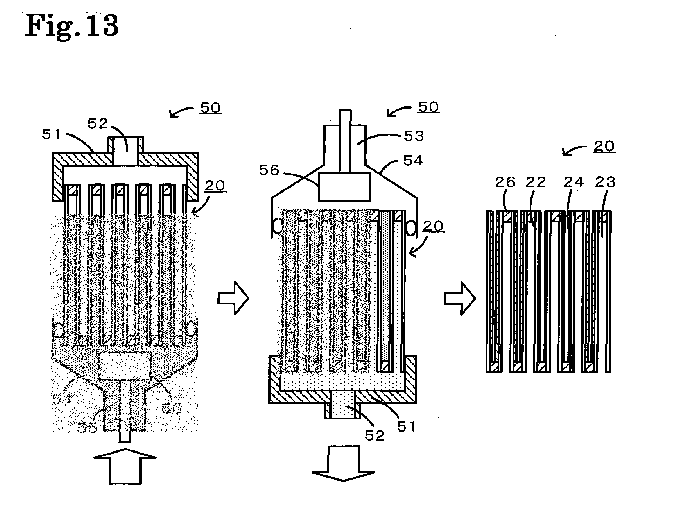

Capturing layers were formed by using either the honeycomb structure having a bonded structure or the honeycomb segments prepared as described above. For the sake of convenience, these are referred to as a honeycomb structure in the description below. A slurry for forming capturing layers were obtained mixing 2.5 wt% of SiC (average particle diameter: 15 µm) as inorganic particles, 0.5 wt% of carboxymethyl cellulose as the organic binder, 2 wt% of colloidal silica as the binding material, and 95 wt% of water as the dispersion medium. Then a honeycomb structure having capturing layers that were made by using a capturing layer forming device 50 shown in Fig. 13 was made. First, one end of the honeycomb structure obtained was fixed to a jig 51 and a supply fixed tube 54 was fixed to the other end of the honeycomb structure. A penetrating hole 52 is formed at the center of the jig 51. A supply port 53 for supplying the slurry is formed at a tip of the supply fixed tube 54. A supply adjusting plate 56 that adjusts the supply of the slurry is disposed between the supply fixed tube 54 and the honeycomb filter 20. The supply adjusting plate 56 has a penetrating hole at the center and is a member that adjusts the flow rate of the slurry so that the supply of the slurry to the outer peripheral region is smaller than that to the central region of the honeycomb filter. Next, the supply adjusting plate 56 was fixed at a position empirically determined beforehand to form a film of a particular thickness, and the slurry was pumped from the supply port 53 to supply the slurry to the interiors of the cells of the honeycomb structure with no sealing portions 26 formed at the supply-port-53-side (the diagram on the left in Fig. 13). Next, suction was conducted through the penetrating hole 52 of the jig 51 to discharge water, i.e., the solvent of the slurry, through the partition portion 22 (the diagram at the center in Fig. 13). During this process, the solid components of the slurry remained inside the cells 23 having the opening portions at the supply-fixed-tube-54-side and capturing layers were thereby formed on the partition portion. The resulting honeycomb structure was dried with a hot air drier and heat-treated for 1 hour at 700°C to obtain a honeycomb filter (honeycomb segments) (refer to the diagram on the right in Fig. 13). The honeycomb segments having the capturing layers were used in the above-described bonding step.

### [Manufacture of the honeycomb structure having an integral structure]

A honeycomb filter having an integral structure was manufactured. First, alumina (average particle diameter: 2.5 µm), kaolin (average particle diameter: 2.6 µm), talc (average particle diameter: 3 µm), and silica (average particle diameter: 3.6 µm) were used as the cordierite material. To 100 parts by weight of the cordierite material, 13 parts by weight of a pore-forming agent, 35 parts by weight of a dispersion medium, 6 parts by weight of an organic binder, and 0.5 parts by weight of a dispersing agent were added to prepare a puddle. Water was used as the dispersion medium, coke having an average particle diameter of 10 µm was used as the pore-forming agent, hydroxypropyl methyl cellulose was used as the organic binder, and ethylene glycol was used as the dispersing agent. Next, the puddle was extrusion-formed by using a particular die to obtain a honeycomb formed body having rectangular cells and a columnar (cylindrical) overall shape (refer to Fig. 1). Here, the thickness of the partition portion of the honeycomb filter was 310 µm, the cell density was 46.5 cells/cm² (300 cells/square inch), the diameter of a cross-section was 144 mm, and the length was 152 mm. The honeycomb formed body was dried with a microwave drier and further with a hot air drier to be completely dried and two end faces of the honeycomb formed body were cut to into particular dimensions. Next, a mask was formed on one end face of the honeycomb formed body so that the cell opening portions were masked alternately in a checkerboard pattern, and the masked end face was dipped in a sealing slurry containing the cordierite material to form sealing portions in such a manner that the opening portions and the sealing portions were arranged alternately. The other end face was masked in the same manner so as to form the sealing portions in such a manner that cells each having one end open and the other end sealed and cells each having one end sealed and the other end open were alternately arranged. Subsequently, the honeycomb formed body with the sealing portions was dried with a hot air drier and baked at 1410°C to 1440°C for 5 hours to obtain a honeycomb structure mainly composed of cordierite.

### [Formation of capturing layers]

The formation of the capturing layers was conducted by using the honeycomb structure having an integral structure manufactured as described above. First, aluminosilicate fibers having an average diameter of 3 µm and an average length of 105 µm as the fiber material, silica having an average particle diameter of 1 µm as the inorganic particles, and cellulose as an organic binder were mixed at a weight ratio of 90:10:5. The resulting mixture in a total amount of 100 parts by weight was mixed with 5 L of water to obtain a slurry for forming capturing layers. Next, as with the manufacture of the honeycomb filter having a bonded structure described above, a honeycomb filter including capturing layers formed by using the capturing layer forming device 50 shown in Frig. 13 was manufactured. After forming the capturing layers, the honeycomb structure was dried with a hot air drier and heat-treated at 700°C for 1 hour to obtain a honeycomb filter.

### [Catalyst supporting step]

A catalyst was supported on the honeycomb filter having the integral structure or the bonded structure manufactured as above. A catalyst slurry was prepared by adding Al₂O₃ sol and water to a Pt-supporting γ-Al₂O₃ catalyst and CeO₂ powder (promoter). Next, the catalyst slurry was supported by wash coating so that the platinum component is 1.06 g/L relative to the honeycomb filter and the total of the catalyst components was 30 g/L. Supporting of the catalyst was conducted by causing the catalyst slurry to flow into the cells (cells at the exhaust gas discharge side) from the end face of the honeycomb filter at the exhaust gas discharge side so that a large amount of catalyst was present on the partition. After drying at a temperature of 120°C, heat treatment at 500°C was conducted for 3 hours to obtain a catalyst-supporting honeycomb filter.

### [Experimental Example 1]

The honeycomb filter having a bonded structure formed by bonding the honeycomb segments prepared as above was used to form a honeycomb filter having capturing layers formed on the partition portion so that the thickness of the capturing layers decreases from the outer peripheral region toward the central region of the honeycomb filter (refer to Fig. 9(a)). For the sake of convenience, this structure is also referred to as A-type hereinafter. In Experimental Example 1, manufacture was conducted as follows. Capturing layers in the central region and the outer peripheral region of each honeycomb segment positioned in the central region of the honeycomb filter were formed to have a thickness of 49 µm and 50 µm respectively. Capturing layers in the central region of the honeycomb segments positioned in the outer peripheral region of the honeycomb filter were formed to have a thickness of 49 µm and capturing layers in the outer peripheral region thereof were formed to have a thickness of 50 µm. The thickness (µm) of the capturing layers in Experimental Example 1, the ratio (%) of the thickness of the capturing layers in the outer peripheral region to that in the central region, and the regeneration efficiency (%) are summarized in Table 1. In Table 1, values of Experimental Examples 2 to 16 described below are also presented.

**[Table 1]**

| | Structure¹⁾ | Segment in Central region | | | Segment in outer peripheral region | | | Ratio⁴⁾ in Integral-type | Regeneration efficiency | Pressure loss |
|---|---|---|---|---|---|---|---|---|---|---|
| | | Thickness a in central portion | Thickness b in outer peripheral portion | Ratio²⁾ | Thickness c in central portion | Thickness d in outer peripheral portion | Ratio³⁾ | | | |
| | | µm | µm | % | µm | µm | % | % | % | kPa |
| Experimental Example 1 | A-type | 49 | 50 | 98.0 | 49 | 50 | 98.0 | 98.0 | 83 | 8.1 |
| Experimental Example 2 | A-type | 46 | 47 | 97.9 | 49 | 50 | 98.0 | 92.0 | 91 | 8.3 |
| Experimental Example 3 | A-type | 42 | 44 | 95.5 | 48 | 50 | 96.0 | 84.0 | 93 | 8.4 |
| Experimental Example 4 | A-type | 34 | 36 | 94.4 | 44 | 50 | 88.0 | 68.0 | 94 | 8.9 |
| Experimental Example 5 | A-type | 28 | 30 | 93.3 | 40 | 50 | 80.0 | 56.0 | 95 | 12.0 |
| Experimental Example 6 | A-type | 46 | 47 | 97.9 | 49 | 50 | 98.0 | 92.0 | 90 | 8.1 |
| Experimental Example 7 | A-type | 34 | 36 | 94.4 | 44 | 50 | 88.0 | 68.0 | 95 | 8.7 |
| Experimental Example 8 | B-type | 48 | 50 | 96.0 | 49 | 50 | 98.0 | 96.0 | 84 | 8.2 |
| Experimental Example 9 | B-type | 46 | 50 | 92.0 | 47 | 50 | 94.0 | 92.0 | 97 | 8.3 |
| Experimental Example 10 | B-type | 37 | 50 | 74.0 | 38 | 50 | 76.0 | 74.0 | 90 | 9.0 |
| Experimental Example 11 | B-type | 28 | 50 | 56.0 | 27 | 50 | 54.0 | 56.0 | 91 | 12.6 |
| Experimental Example 12 | C-type | 49 | 50 | 98.0 | 49 | 50 | 98.0 | 98.0 | 84 | 8.0 |
| Experimental Example 13 | C-type | 47 | 49 | 95.9 | 49 | 50 | 98.0 | 94.0 | 90 | 8.2 |
| Experimental Example 14 | C-type | 40 | 43 | 93.0 | 47 | 50 | 94.0 | 80.0 | 92 | 8.5 |
| Experimental Example 15 | C-type | 34 | 40 | 85.0 | 43 | 50 | 86.0 | 68.0 | 95 | 8.9 |
| Experimental Example 16 | C-type | 29 | 50 | 58.0 | 39 | 50 | 78.0 | 58.0 | 96 | 12.6 |

| | | | | | | | | | | |
|---|---|---|---|---|---|---|---|---|---|---|
| 1) A-type: Thickness (film thickness) in the central portion is small as the entirety formed by bonding honeycomb segments. B-type: Thickness is uniform as a whole but thickness in the central portion in each honeycomb segment is small. C-type: Thickness in the central portion is small as the entirety and in each honeycomb segment. 2) Ratio is calculated by (thickness a in central portion)/(thickness b in outer peripheral portion) × 100 3) Ratio is calculated by (thickness c in central portion)/(thickness d in outer peripheral portion) × 100 4) Ratio is calculated by (thickness ca in central portion at the center)/(thickness d in outer peripheral portion at the outer periphery) × 100 | | | | | | | | | | |

### [Experimental Examples 2 to 5]

In Experimental Example 2, an A-type honeycomb filter was made as in Experimental Example 1 except that the thickness of capturing layers in the central region of honeycomb segments positioned in the central region of the honeycomb filter, the thickness of capturing layers in the outer peripheral region of these honeycomb segments, the thickness of capturing layers in the central region of honeycomb segments positioned in the outer peripheral region of the honeycomb filter, and the thickness of capturing layers in the outer peripheral region of these honeycomb segments were respectively set to 46 µm, 47 µm, 49 µm, and 50 µm. Similarly, in Experimental Example 3, an A-type honeycomb filter was manufactured while the thicknesses were respectively set to 42 µm, 44 µm, 48 µm, and 50 µm. Similarly, in Experimental Example 4, an A-type honeycomb filter was manufactured while the thicknesses were respectively set to 34 µm, 36 µm, 44 µm, and 50 µm. Similarly, in Experimental Example 5, an A-type honeycomb filter was manufactured while the thicknesses were respectively set to 28 µm, 30 µm, 40 µm, and 50 µm.

### [Experimental Examples 6 and 7]

The honeycomb filter having a bonded structure formed by bonding the honeycomb segments prepared as above was used to form a honeycomb filter having capturing layers formed by supplying gas containing materials for the capturing layers to the cells. Formation of the capturing layers was conducted as follows. SiC (average particle diameter: 3 µm) was prepared as inorganic particles, and air containing a particular amount of the particles was supplied from inlet-side cells of the honeycomb segments by using a capturing layer forming device for the honeycomb segment size to supply air as a carrier medium from the device inlet side and suction air from the device outlet side. Subsequently, heat treatment was conducted at 1300°C to bond the particles constituting the capturing layers and thereby obtain segments with the capturing layers. A plurality of segments with capturing layers of different thicknesses were manufactured by adjusting the amount of particles supplied to the segments, and the segments were bonded such that the capturing layers in twelve segments constituting the outer peripheral side were thicker than those in four segments constituting the center. In Experimental Example 6, capturing layers were formed as in Experimental Example 2 but by adjusting the amount of the inorganic particles, and in Experimental Example 7, capturing layers were formed as in Experimental Example 4 but by adjusting the amount of the inorganic particles.

### [Experimental Examples 8 to 11]

The honeycomb filter having a bonded structure formed by bonding the honeycomb segments prepared as above was used to form a honeycomb filter having capturing layers formed on the partition portion so that the thickness of the capturing layers is uniform in the honeycomb filter as a whole but decreases toward the outer peripheral region of each honeycomb segment (refer to Fig. 11). For the sake of convenience, this structure is also referred to as B-type hereinafter. In Experimental Example 8, manufacture was conducted as follows. A B-type honeycomb filter of Experimental Example 8 was manufactured by respectively setting the thickness of the capturing layers in the central region of honeycomb segments positioned in the central region of the honeycomb filter, the thickness of capturing layers in the outer peripheral region of these honeycomb segments, the thickness of capturing layers in the central region of honeycomb segments positioned in the outer peripheral region of the honeycomb filter, and the thickness of capturing layers in the outer peripheral region of these honeycomb segments to 48 µm, 50 µm, 49 µm, and 50 µm. Similarly, in Experimental Example 9, a B-type honeycomb filter was manufactured while the thicknesses were respectively set to 46 µm, 50 µm, 47 µm, and 50 µm. Similarly, in Experimental Example 10, a B-type honeycomb filter was manufactured while the thicknesses were respectively set to 37 µm, 50 µm, 38 µm, and 50 µm. Similarly, in Experimental Example 11, a B-type honeycomb filter was manufactured while the thicknesses were respectively set to 28 µm, 50 µm, 27 µm, and 50 µm.

### [Experimental Examples 12 to 16]

The honeycomb filter having a bonded structure formed by bonding the honeycomb segments prepared as above was used to form a honeycomb filter having capturing layers formed on the partition portion so that the thickness of the capturing layers has a tendency to decrease toward the outer peripheral region of the honeycomb filter as a whole and the thickness of capturing layers decreases toward the outer peripheral region in each of the honeycomb segments (refer to Fig. 7). For the sake of convenience, this structure is also referred to as C-type hereinafter. In Experimental Example 12, manufacture was conducted as follows. A C-type honeycomb filter of Experimental Example 12 was manufactured by respectively setting thickness of capturing layers in the central region of honeycomb segments positioned in the central region of the honeycomb filter, the thickness of capturing layers in the outer peripheral region of these honeycomb segments, the thickness of capturing layers in the central region of honeycomb segments positioned in the outer peripheral region of the honeycomb filter, and the thickness of capturing layers in the outer peripheral region of these honeycomb segments to 49 µm, 50 µm, 49 µm, and 50 µm. Similarly, in Experimental Example 13, a C-type honeycomb filter was manufactured while the thicknesses were respectively set to 47 µm, 49 µm, 49 µm, and 50 µm. Similarly, in Experimental Example 14, a C-type honeycomb filter was manufactured while the thicknesses were respectively set to 40 µm, 43 µm, 47 µm, and 50 µm. Similarly, in Experimental Example 15, a C-type honeycomb filter was manufactured while the thicknesses were respectively set to 34 µm, 40 µm, 43 µm, and 50 µm. Similarly, in Experimental Example 16, a C-type honeycomb filter was manufactured while the thicknesses were respectively set to 29 µm, 50 µm, 39 µm, and 50 µm.

### [Experimental Examples 17 to 21]

The honeycomb filter having an integral structure prepared as above was used to form a honeycomb filter having capturing layers formed on the partition portion so that the thickness of the capturing layers decrease toward the outer peripheral region in the honeycomb filter as a whole (refer to Fig. 1). A honeycomb filter having an integral structure of Experimental Example 17 was manufactured by respectively setting the thickness of capturing layers in the central region of the honeycomb filter and the thickness of capturing layers in the outer peripheral region to 48 µm and 50 µm. Similarly, in Example 18, a honeycomb filter was manufactured by setting the thicknesses to 46 µm and 50 µm respectively. Similarly, in Example 19, a honeycomb filter was manufactured by setting the thicknesses to 41 µm and 50 µm respectively. Similarly, in Example 20, a honeycomb filter was manufactured by setting the thicknesses to 32 µm and 50 µm respectively. Similarly, in Example 21, a honeycomb filter was manufactured by setting the thicknesses to 27 µm and 50 µm respectively. The thickness (µm) of the capturing layers, the ratio (%) of the thickness of the capturing layers in the outer peripheral region to that in the central region, and the regeneration efficiency (%) in Experimental Examples 17 to 21 are summarized in Table 2. In Table 2, values of Experimental Examples 22 to 23 described below are also presented.

**[Table 2]**

| | Structure | Thickness in central portion | Thickness in outer peripheral portion | Ratio | Regeneration efficiency | Pressure loss |
|---|---|---|---|---|---|---|
| | | *µ*m | *µ*m | % | % | kPa |
| Experimental Example 17 | Integral | 48 | 50 | 96 | 83 | 6.0 |
| Experimental Example 18 | Integral | 46 | 50 | 92 | 91 | 6.0 |
| Experimental Example 19 | Integral | 41 | 50 | 82 | 93 | 6.3 |
| Experimental Example 20 | Integral | 32 | 50 | 64 | 94 | 7.2 |
| Experimental Example 21 | Integral | 27 | 50 | 54 | 94 | 11.7 |
| Experimental Example 22 | Integral | 46 | 50 | 92 | 92 | 6.0 |
| Experimental Example 23 | Integral | 32 | 50 | 64 | 94 | 7.0 |

### [Experimental Examples 22 to 23]

The honeycomb filter having an integral structure prepared as above was used to form a honeycomb filter having capturing layers formed by supplying gas containing materials for the capturing layers. Formation of the capturing layers was conducted as follows. Cordierite Scherben particles (average particle diameter: 3 µm) obtained by pulverizing a cordierite base material was used as the material for the capturing layers. Air containing a particular amount of particles was supplied from the inlet side cells of the honeycomb structure by using a capturing layer forming device to supply the air as the carrier medium from the device inlet side and suction air from the device outlet side. During this process, a flow rate adjusting plate was disposed at the inlet side of the honeycomb structure to adjust the flow rate distribution of the supplied gas. The flow rate adjusting plate had a plurality of penetrating holes and adjusted such that the amount of gas transferred to the outer peripheral region of the honeycomb structure is larger than that transferred to the central region. Subsequently, heat treatment was conducted at 1300°C to bond the particles constituting the capturing layers and thereby obtain a honeycomb filter having capturing layers. In Experimental Example 22 capturing layers were formed as in Experimental Example 18 but by adjusting the amount of inorganic particles, and in Experimental Example 23, capturing layers were formed as in Experimental Example 20 but by adjusting the amount of inorganic particles.

### [Regeneration efficiency test]

In an engine bench test, post injection was performed while keeping 10 minutes the engine speed to 1800 rpm and engine torque to 90 Nm to burn off PM deposited in the honeycomb filter. The temperature of the entrance gas of the honeycomb filter at this time was set to 650°C. The regeneration efficiency was calculated from the amount of the PM deposition at before regeneration process and the amount of the PM deposition at after regeneration process. When the regeneration efficiency is lower than 90 [%] or less, the remaining amount of PM increases whenever the compulsion regeneration process is repeated, the interval of the compulsion regeneration process might be greatly shortened and fuel cost deteriorate greatly. Oppositely when the regeneration efficiency is 90% or more, remaining PM doesn't increase at each compulsion regeneration process even if the compulsion regeneration process is repeated, the deterioration of great fuel cost doesn't happen because the interval of the compulsion regeneration process is steady.

### [Pressure loss test]

As with the regeneration efficiency test described above, the pressure loss value when the PM deposition amount of the honeycomb filter was 4.0 [g/L] was measured in a steady state under the engine conditions of 2000 rpm and 50 Nm torque, and the results are shown in Tables 1 and 2. Note that 4.0 [g/L] is the median of 8.0 [g/L] which is a general PM deposition limit set value for vehicle mounting, and is used in evaluating the effects of the pressure loss caused by PM deposition on the driving fuel economy. When the pressure loss value during PM deposition exceeds 13.0 [kPa], the fuel economy during driving deteriorates by 5% or more and the merchantability of the vehicle decreases significantly. Thus the pressure loss value needs to be 13.0 [kPa] or less.

### (Experimental Results)

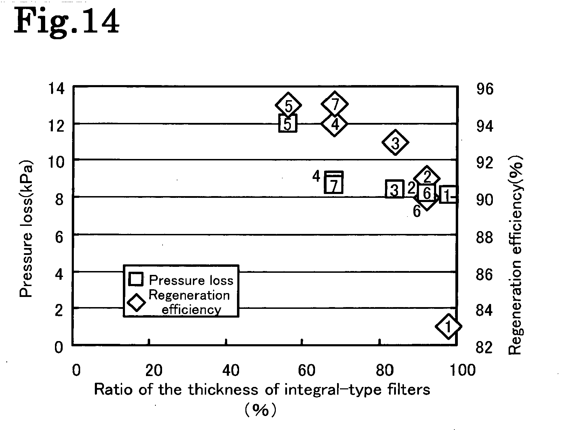

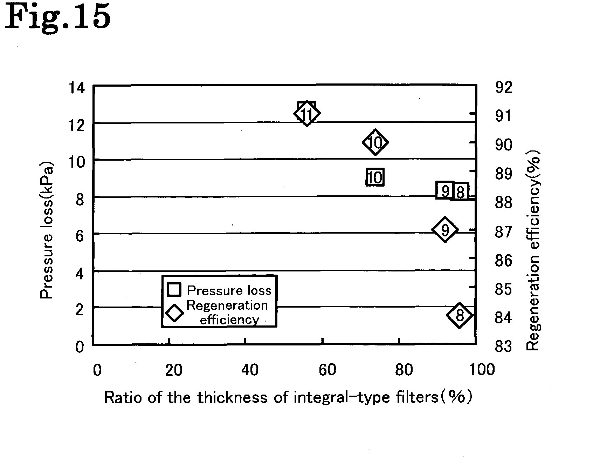

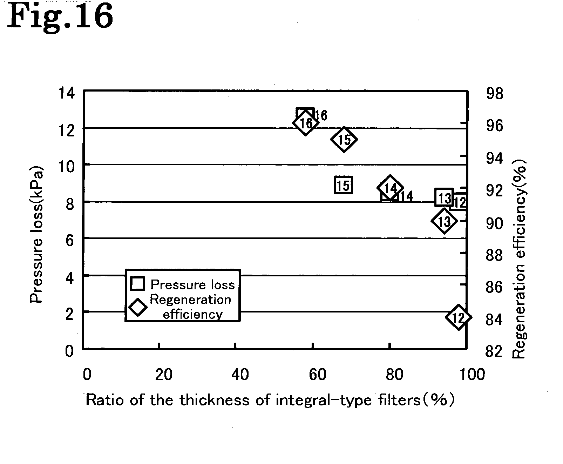

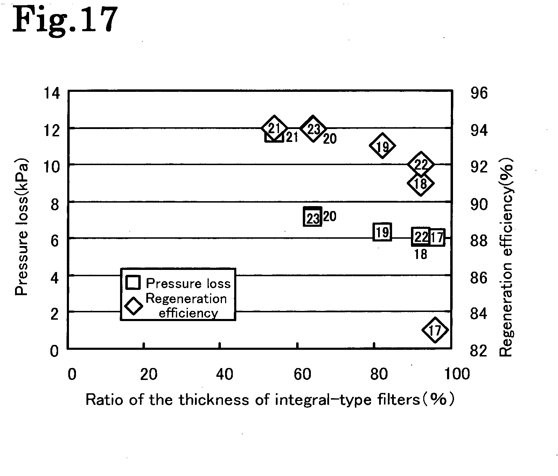

The measurement results showing the relationship between the pressure loss and the regeneration efficiency relative to the ratio of the thickness as an integral-type product in Experimental Examples 1 to 7 are shown in Fig. 14. The measurement results showing the relationship between the pressure loss and the regeneration limit relative to the ratio of the thickness as an integral-type product in Experimental Examples 8 to 11 are shown in Fig. 15. The measurement results showing the relationship between the pressure loss and the regeneration limit relative to the ratio of the thickness as an integral-type product in Experimental Examples 12 to 16 are shown in Fig. 16. The measurement results showing the relationship between the pressure loss and the regeneration limit relative to the ratio of the thickness as an integral-type product in Experimental Examples 17 to 23 are shown in Fig. 17. Here, "the ratio of the thickness as an integral-type product" means the ratio of the thickness in the central region to the thickness in the outer peripheral region as an integral-type product. These results are studied. Regarding the regeneration efficiency test, as shown in Table 1 and Fig. 14, the regeneration efficiency improved significantly when the ratio of the thickness indicating the thinness of the capturing layers in the outer peripheral region side decreased from 98% to 92% in Experimental Examples 1 and 2. This is presumably because exhaust gas is led to flow into the central portion where the capturing layers are thin due to the flow velocity distribution at a capturing layer thickness ratio of 95% or less, resulting in easily depositing of PM in the center part where the capturing layers are thin and the temperature rise of the capturing layers is high at the time of regeneration and improving the regeneration efficiency. It was also found that the portion contributing to the regeneration is large at the stage where the difference in thickness of the capturing layers between the central side and the outer peripheral side is small. The same tendency was observed in the relationship between Experimental Examples 8 and 9, the relationship between the Experimental Examples 12 and 13, and the relationship between Experimental Examples 17 and 18.

Next, regarding the pressure loss test, as shown in Table 1 and Fig. 14, the pressure loss improved significantly when the ratio of the thickness of the capturing layers changed from 56% to 68% in Experimental Examples 3 and 5. This is presumably because the capturing layers exhibited a higher capturing function when the ratio of the thickness of the capturing layers in the outer peripheral portion is 60% or more, thereby suppressing deposition of PM in pores in the partition portion and suppressing the increase in pressure loss. It was also found that the portion contributing to the pressure loss is large when the ratio of the thickness of the capturing layers is near 60%. The same tendency was observed in the relationship between Experimental Examples 10 and 11, the relationship between the Experimental Examples 15 and 16,
and the relationship between Experimental Examples 20 and 21. In sum, it was found that there is a trade-off relationship between decreasing the pressure loss and improving the regeneration efficiency, and favorable pressure loss decreasing effects and regeneration efficiency improving effects are obtained when the ratio of the thickness of the capturing layers is in the range of 60% or more and 95% or less.

### Industrial Applicability

The present invention is suitable for use as a filter for cleaning exhaust gas emitted from stationary engines and combustion devices for automobiles, construction equipment, and industrial use.

## Claims

1. A honeycomb filter comprising:
a porous partition portion that forms a plurality of cells each having one end open and the other end sealed and functioning as a channel of a fluid; and
capturing layers that capture and remove solid components in the fluid, the capturing layers being formed on the partition portion so that the thickness of the capturing layers has a tendency to decrease from an outer peripheral region of the honeycomb filter toward a central region of the honeycomb filter, the central region and the outer peripheral region being included in an orthogonal plane orthogonal to the channel,
wherein the capturing layers are formed so that the ratio of the thickness in the central region to the thickness in the outer peripheral region is in the range of 60% or more and 95% or less.

2. The honeycomb filter according to Claim 1, wherein the capturing layers are formed to have a first thickness on the partition portion in the outer peripheral region and are formed to have a second thickness smaller than the first thickness on the partition portion in the central region.

3. The honeycomb filter according to Claim 1 or 2, wherein the honeycomb filter is formed by bonding two or more honeycomb structures, each having the partition portion, by a bonding layer; and
the capturing layers are formed on the partition portion so that the thickness of the capturing layers has a tendency to decrease from the outer peripheral region of the honeycomb filter toward the central region of the honeycomb filter, the central region and the outer peripheral region being included in the orthogonal plane orthogonal to the channel.

4. The honeycomb filter according to Claim 3, wherein at least one of the honeycomb structures is a honeycomb structure that includes the capturing layers formed on the partition portion so that the thickness of the capturing layers has a tendency to decrease from a outer peripheral region of the honeycomb structure toward an central region of the honeycomb structure, the central region and the outer peripheral region being included in the orthogonal plane.

5. A honeycomb filter comprising:
two or more honeycomb structures each including a porous partition portion that forms a plurality of cells each having one end open and the other end sealed and functioning as a channel of a fluid, and capturing layers that capture and remove solid components in the fluid, the capturing layers being formed on the partition portion; and
a bonding layer that bonds the two or more honeycomb structures,
wherein, in at least one of the honeycomb structures, the capturing layers are formed on the partition portion so that the thickness of the capturing layers has a tendency to decrease from an outer peripheral region of the honeycomb structure toward a central region of the honeycomb structure, the central region and the outer peripheral region being included in an orthogonal plane orthogonal to the channel, and
the capturing layers are formed so that the ratio of the thickness in the central region to the thickness in the outer peripheral region is in the range of 60% or more and 95% or less.

6. The honeycomb filter according to Claim 5,
wherein the honeycomb structure in which the capturing layers are formed so that the thickness has a tendency to decrease from the outer peripheral region toward the central region of the honeycomb structure is at least disposed in a central region of the honeycomb filter included in the orthogonal plane.

7. The honeycomb filter according to any one of Claims 1 to 6, wherein the capturing layers support a catalyst containing at least one of platinum and palladium.

8. A method for manufacturing a honeycomb filter that captures and removes solid components in a fluid, the method comprising:
a partition portion forming step of forming a porous partition portion that forms a plurality of cells each having one end open and the other end sealed and functioning as a channel of a fluid; and
a capturing layer forming step of adjusting a supply adjusting member that adjusts supply of a slurry to the cells and thereby changes the amount of a slurry, which contains materials for capturing layers that capture and remove solid components in a fluid, supplied to the cells to form the capturing layers on the partition portion so that the thickness of the capturing layers has a tendency to decrease from an outer peripheral region of the honeycomb filter toward a central region of the honeycomb filter, the central region and the outer peripheral region being included in an orthogonal plane orthogonal to the channel,
wherein in the capturing layer formation step the capturing layers are formed so that the ratio of the thickness in the central region to the thickness in the outer peripheral region is in the range of 60% or more and 95% or less.

9. A method for manufacturing a honeycomb filter formed by bonding two or more honeycomb structures that capture and remove solid components in a fluid, comprising:
a structure making step of making honeycomb structures each including a porous partition portion that forms a plurality of cells each having one end open and the other end sealed and functioning as a channel of a fluid, and
a capturing layer forming step of adjusting a supply adjusting member that adjusts supply of a slurry to the cells and thereby changes the amount of a slurry, which contains materials for capturing layers that capture and remove solid components in a fluid, supplied to the cells to form the capturing layers on the partition portion so that the thickness of the capturing layers has a tendency to decrease from an outer peripheral region of each honeycomb structure toward a central region of the honeycomb structure, the central region and the outer peripheral region being included in an orthogonal plane orthogonal to the channel, the capturing layer forming step being performed before or after a bonding step of bonding the honeycomb structures by a bonding layer,
wherein in the capturing layer formation step the capturing layers are formed so that the ratio of the thickness in the central region to the thickness in the outer peripheral region is in the range of 60% or more and 95% or less.

## Patentansprüche

1. Wabenfilter, der Folgendes umfasst:
einen porösen Trennabschnitt, der eine Vielzahl von Zellen bildet, die jeweils ein offenes Ende und das andere Ende verschlossen aufweisen und als Fluidkanal fungieren; und
Auffangschichten, die feste Komponenten in dem Fluid auffangen und entfernen, wobei die Auffangschichten auf dem Trennabschnitt so ausgebildet sind, dass die Dicke der Auffangschichten von einem Außenumfangsbereich des Wabenfilters zu einem zentralen Bereich des Wabenfilters allmählich abnimmt, wobei der zentrale Bereich und der Außenumfangsbereich Teil einer orthogonalen Ebene sind, die im rechten Winkel auf den Kanal steht,
worin die Auffangschichten so ausgebildet sind, dass das Verhältnis der Dicke im zentralen Bereich zu der Dicke in dem Außenumfangsbereich im Bereich von 60 % oder mehr und 95 % oder weniger liegt.

2. Wabenfilter nach Anspruch 1, worin die Auffangschichten so ausgebildet sind, dass sie eine erste Dicke auf dem Trennabschnitt in dem Außenumfangsabschnitt aufweisen und dass sie ausgebildet sind, um auf dem Trennabschnitt in dem zentralen Bereich eine zweite Dicke aufzuweisen, die geringer ist als die erste Dicke.

3. Wabenfilter nach Anspruch 1 oder 2, worin der Wabenfilter durch das haftschlüssige Verbinden von zwei oder mehr Wabenstrukturen mittels einer Haftverbindungsschicht ausgebildet wird, die jeweils den Trennabschnitt aufweisen, und
die Auffangschichten auf dem Trennabschnitt so ausgebildet sind, dass die Dicke der Auffangschichten von dem Außenumfangsbereich des Wabenfilters in Richtung des zentralen Bereichs des Wabenfilters allmählich abnimmt, wobei der zentrale Bereich und der Außenumfangsbereich Teil der orthogonalen Ebene sind, die im rechten Winkel auf den Kanal steht.

4. Wabenfilter nach Anspruch 3, worin zumindest eine der Wabenstrukturen eine Wabenstruktur ist, die die Auffangschichten umfasst, die auf dem Trennabschnitt so ausgebildet sind, dass die Dicke der Auffangschichten von dem Außenumfangsbereich der Wabenstruktur in Richtung des zentralen Bereichs der Wabenstruktur allmählich abnimmt, wobei der zentrale Bereich und der Außenumfangsbereich Teil der orthogonalen Ebene sind.

5. Wabenfilter, der Folgendes umfasst:
zwei oder mehr Wabenstrukturen, die jeweils einen porösen Trennabschnitt umfassen, der eine Vielzahl von Zellen bildet, die jeweils ein offenes Ende und ein verschlossenes Ende aufweisen und als Fluidkanal fungieren, und Auffangschichten, die feste Komponenten in dem Fluid auffangen und entfernen, wobei die Auffangschichten auf dem Trennabschnitt ausgebildet sind;
und eine Haftverbindungsschicht, die die zwei oder mehr Wabenstrukturen haftschlüssig verbindet,
worin in zumindest einer der Wabenstrukturen die Auffangschichten auf dem Trennabschnitt so ausgebildet sind, dass die Dicke der Auffangschichten von dem Außenumfangsbereich der Wabenstruktur in Richtung des zentralen Bereichs der Wabenstruktur allmählich abnimmt, wobei der zentrale Bereich und der Außenumfangsbereich Teil der orthogonalen Ebene sind, die im rechten Winkel auf den Kanal steht, und
die Auffangschichten so ausgebildet sind, dass das Verhältnis der Dicke im zentralen Bereich zu der Dicke in dem Außenumfangsbereich im Bereich von 60 % oder mehr und 95 % oder weniger liegt.

6. Wabenfilter nach Anspruch 5,
worin die Wabenstruktur, in der die Auffangschichten so ausgebildet sind, dass die Dicke von dem Außenumfangsbereich in Richtung des zentralen Bereichs der Wabenstruktur allmählich abnimmt, zumindest in einem zentralen Bereich des Wabenfilters angeordnet ist, der Teil der orthogonalen Ebene ist.

7. Wabenfilter nach einem der Ansprüche 1 bis 6, worin die Auffangschichten einen Katalysator tragen, der zumindest ein Element ausgewählt aus Platin und Palladium enthält.

8. Verfahren zur Herstellung eines Wabenfilters, der feste Komponenten in einem Fluid auffängt und entfernt, wobei das Verfahren Folgendes umfasst:
einen Trennabschnittausbildungsschritt, bei dem ein poröser Trennabschnitt gebildet wird, der eine Vielzahl von Zellen bildet, die jeweils ein offenes Ende und ein verschlossenes Ende aufweisen und als Fluidkanal fungieren; und
einen Auffangschichtenausbildungsschritt, bei dem ein Zufuhreinstellungselement eingestellt wird, das die Zufuhr einer Aufschlämmung zu den Zellen einstellt und dadurch die Menge der Aufschlämmung verändert, die Materialien für Auffangschichten enthält, die feste Komponenten in einem Fluid auffangen und entfernen, und den Zellen zugeführt wird, um die Auffangschichten auf dem Trennabschnitt so auszubilden, dass die Dicke der Auffangschichten von einem Außenumfangsbereich des Wabenfilters in Richtung eines zentralen Bereichs des Wabenfilters allmählich abnimmt, wobei der zentrale Bereich und der Außenumfangsbereich Teil einer orthogonalen Ebene sind, die im rechten Winkel auf den Kanal steht,
worin in dem Auffangschichtenausbildungsschritt die Auffangschichten so ausgebildet werden, dass das Verhältnis der Dicke in dem zentralen Bereich zu der Dicke in dem Außenumfangsbereich im Bereich von 60 % oder mehr und 95 % oder weniger liegt.

9. Verfahren zur Herstellung eines Wabenfilters, der durch das haftschlüssige Verbinden von zwei oder mehr Wabenstrukturen ausgebildet wird, die feste Komponenten in einem Fluid auffangen und entfernen, wobei das Verfahren Folgendes umfasst:
einen Strukturherstellungsschritt zur Herstellung von Wabenstrukturen, die jeweils einen porösen Trennabschnitt umfassen, der eine Vielzahl von Zellen bildet, die jeweils ein offenes Ende und ein verschlossenes Ende aufweisen und als Fluidkanal fungieren, und
einen Auffangschichtenausbildungsschritt, bei dem ein Zufuhreinstellungselement eingestellt wird, das die Zufuhr einer Aufschlämmung zu den Zellen einstellt und dadurch die Menge der Aufschlämmung verändert, die Materialien für Auffangschichten enthält, die feste Komponenten in einem Fluid auffangen und entfernen, und den Zellen zugeführt wird, um die Auffangschichten auf dem Trennabschnitt so auszubilden, dass die Dicke der Auffangschichten von einem Außenumfangsbereich jeder Wabenstruktur in Richtung eines zentralen Bereichs der Wabenstruktur allmählich abnimmt, wobei der zentrale Bereich und der Außenumfangsbereich Teil einer orthogonalen Ebene sind, die im rechten Winkel auf den Kanal steht, wobei der Auffangschichtenausbildungsschritt vor oder nach einem Haftverbindungsschritt durchgeführt wird, bei dem die Wabenstrukturen durch eine Haftverbindungsschicht haftschlüssig verbunden werden,
worin in dem Auffangschichtenausbildungsschritt die Auffangschichten so ausgebildet werden, dass das Verhältnis der Dicke in dem zentralen Bereich zu der Dicke in dem Außenumfangsbereich im Bereich von 60 % oder mehr und 95 % oder weniger liegt.

## Revendications

1. Filtre en nid d'abeilles comprenant :
une partie de séparation poreuse qui forme une pluralité de cellules ayant chacune une extrémité ouverte et l'autre extrémité fermée hermétiquement et fonctionnant en tant que canal d'un fluide ; et
des couches de capture qui capturent et retirent les composants solides dans le fluide, les couches de capture étant formées sur la partie de séparation de sorte que l'épaisseur des couches de capture ait tendance à diminuer d'une région périphérique externe du filtre en nid d'abeilles vers une région centrale du filtre en nid d'abeilles, la région centrale et la région périphérique externe étant incluses dans un plan orthogonal qui est orthogonal au canal,
dans lequel les couches de capture sont formées de sorte que le rapport entre l'épaisseur dans la région centrale et l'épaisseur dans la région périphérique externe soit dans la plage de 60 % ou plus et 95 % ou moins.

2. Filtre en nid d'abeilles selon la revendication 1, dans lequel les couches de capture sont formées de manière à avoir une première épaisseur sur la partie de séparation dans la région périphérique externe et sont formées de manière à avoir une deuxième épaisseur inférieure à la première épaisseur sur la partie de séparation dans la région centrale.

3. Filtre en nid d'abeilles selon la revendication 1 ou 2, dans lequel le filtre en nid d'abeilles est formé en liant deux structures de nid d'abeilles ou plus, comportant chacune la partie de séparation, par une couche de liaison ; et
les couches de capture sont formées sur la partie de séparation de sorte que l'épaisseur des couches de capture ait tendance à diminuer de la région périphérique externe du filtre en nid d'abeilles vers la région centrale du filtre en nid d'abeilles, la région centrale et la région périphérique externe étant incluses dans le plan orthogonal qui est orthogonal au canal.

4. Filtre en nid d'abeilles selon la revendication 3, dans lequel au moins l'une des structures de nid d'abeilles est une structure de nid d'abeilles qui comprend les couches de capture formées sur la partie de séparation de sorte que l'épaisseur des couches de capture ait tendance à diminuer d'une région périphérique externe de la structure de nid d'abeilles vers une région centrale de la structure de nid d'abeilles, la région centrale et la région périphérique externe étant incluses dans le plan orthogonal.

5. Filtre en nid d'abeilles comprenant :
deux structures de nid d'abeilles ou plus comprenant chacune une partie de séparation poreuse qui forme une pluralité de cellules ayant chacune une extrémité ouverte et l'autre extrémité fermée hermétiquement et fonctionnant en tant que canal d'un fluide, et des couches de capture qui capturent et retirent les composants solides dans le fluide, les couches de capture étant formées sur la partie de séparation ; et
une couche de liaison qui lie les deux structures de nid d'abeilles ou plus,
dans lequel, dans au moins l'une des structures de nid d'abeilles, les couches de capture sont formées sur la partie de séparation de sorte que l'épaisseur des couches de capture ait tendance à diminuer d'une région périphérique externe de la structure de nid d'abeilles vers une région centrale de la structure de nid d'abeilles, la région centrale et la région périphérique externe étant incluses dans un plan orthogonal qui est orthogonal au canal, et
les couches de capture sont formées de sorte que le rapport entre l'épaisseur dans la région centrale et l'épaisseur dans la région périphérique externe soit dans la plage de 60 % ou plus et 95 % ou moins.

6. Filtre en nid d'abeilles selon la revendication 5, dans lequel la structure de nid d'abeilles, dans laquelle les couches de capture sont formées de sorte que l'épaisseur ait tendance à diminuer de la région périphérique externe vers la région centrale de la structure de nid d'abeilles, est au moins disposée dans une région centrale du filtre en nid d'abeilles incluse dans le plan orthogonal.

7. Filtre en nid d'abeilles selon l'une quelconque des revendications 1 à 6, dans lequel les couches de capture supportent un catalyseur contenant au moins l'un du platine et du palladium.

8. Procédé pour fabriquer un filtre en nid d'abeilles qui capture et retire les composants solides dans un fluide, le procédé comprenant :
une étape de formation de partie de séparation pour former une partie de séparation poreuse qui forme une pluralité de cellules ayant chacune une extrémité ouverte et l'autre extrémité fermée hermétiquement et fonctionnant en tant que canal d'un fluide ; et
une étape de formation de couches de capture pour ajuster un élément d'ajustement de fourniture qui ajuste la fourniture d'une pâte aux cellules et qui change de ce fait la quantité d'une pâte, qui contient des matériaux pour les couches de capture qui capturent et retirent les composants solides dans un fluide, fournie aux cellules pour former les couches de capture sur la partie de séparation de sorte que l'épaisseur des couches de capture ait tendance à diminuer d'une région périphérique externe du filtre en nid d'abeilles vers une région centrale du filtre en nid d'abeilles, la région centrale et la région périphérique externe étant incluses dans un plan orthogonal qui est orthogonal au canal,
dans lequel, à l'étape de formation de couches de capture, les couches de capture sont formées de sorte que le rapport entre l'épaisseur dans la région centrale et l'épaisseur dans la région périphérique externe soit dans la plage de 60 % ou plus et 95 % ou moins.

9. Procédé pour fabriquer un filtre en nid d'abeilles formé en liant deux structures de nid d'abeilles ou plus qui capturent et retirent les composants solides dans un fluide, comprenant :
une étape de réalisation de structures pour réaliser des structures de nid d'abeilles comprenant chacune une partie de séparation poreuse qui forme une pluralité de cellules ayant chacune une extrémité ouverte et l'autre extrémité fermée hermétiquement et fonctionnant en tant que canal d'un fluide, et
une étape de formation de couches de capture pour ajuster un élément d'ajustement de fourniture qui ajuste la fourniture d'une pâte aux cellules et change de ce fait la quantité d'une pâte, qui contient des matériaux pour les couches de capture qui capturent et retirent les composants solides dans un fluide, fournie aux cellules pour former les couches de capture sur la partie de séparation de sorte que l'épaisseur des couches de capture ait tendance à diminuer d'une région périphérique externe de chaque structure de nid d'abeilles vers une région centrale de la structure de nid d'abeilles, la région centrale et la région périphérique externe étant incluses dans un plan orthogonal qui est orthogonal au canal, l'étape de formation de couches de capture étant effectuée avant ou après une étape de liaison pour lier les structures de nid d'abeilles par une couche de liaison,
dans lequel, à l'étape de formation de couches de capture, les couches de capture sont formées de sorte que le rapport entre l'épaisseur dans la région centrale et l'épaisseur dans la région périphérique externe soit dans la plage de 60 % ou plus et 95 % ou moins.
